# EUROPÄISCHE PATENTSCHRIFT

(11) **EP 4 274 723 B1**
(45) Veröffentlichungstag und Bekanntmachung des Hinweises auf die Patenterteilung: **22.01.2025**
(21) Anmeldenummer: 23710007.8
(22) Anmeldetag: 08.03.2023
(51) Int. Cl.: B29C 45/76

(54) **COMPUTERIMPLEMENTIERTES VERFAHREN UND SYSTEM ZUR BESTIMMUNG WENIGSTENS EINER MASCHINE**
COMPUTER-IMPLEMENTED METHOD AND SYSTEM FOR DETERMINING AT LEAST ONE MACHINE
PROCÉDÉ ET SYSTÈME MIS EN OEUVRE PAR ORDINATEUR PERMETTANT DE DÉTERMINER AU MOINS UNE MACHINE

(30) Priorität: 08.03.2022 DE 102022105432
(43) Veröffentlichungstag der Anmeldung: 15.11.2023
(73) Patentinhaber: Arburg GmbH + Co KG, 72290 Loßburg (DE)
(72) Erfinder: FAULHABER, Werner, 72290 Loßburg Wittendorf (DE)
(74) Vertreter: RPK Patenanwälte Reinhardt und Kaufmann Partnerschaft mbB (Pforzheim)
(86) Internationale Anmeldenummer: PCT/EP2023/055848
(87) Internationale Veröffentlichungsnummer: WO 2023/170122

(56) Entgegenhaltungen:
- DE-A1- 102005 047 543
- DE-A1- 102018 111 603
- DE-A1- 102020 107 524
- US-A1- 2002 193 972

## Beschreibung

Die Erfindung betrifft ein Verfahren bzw. ein System zur Bestimmung wenigstens einer Maschine zur Verarbeitung von Kunststoffen und anderer plastifizierbarer Materialien auf Grundlage von für eine Produktion von Bauteilen bestimmten und/oder bestimmbaren Kriterien mit den Merkmalen des Anspruches 1 bzw. 10 sowie eine zugehörige Maschinensteuerung zur Ausführung des Verfahrens mit den Merkmalen des Anspruches 17 als auch ein Computerprogrammprodukt zur Durchführung des Verfahrens mit den Merkmalen des Anspruches 18.

Bevor im Folgenden auf den Stand der Technik und die davon ausgehende Erfindung näher eingegangen wird, werden zunächst die im Rahmen dieser Anmeldung verwendeten Begrifflichkeiten definiert.

Wenn im Rahmen dieser Anmeldung der Begriff "Bauteil" verwendet wird, so soll dies nicht einschränkend sein, denn das Verfahren kann auch beim Mehrkomponenten-Spritzgießen, im Mehrkavitäten-Spritzgießen, im Spritzgießen mit sogenannten Familienwerkzeugen oder bekannten Sonderverfahren oder auch bei der additiven Fertigung eingesetzt werden. In all diesen Fällen werden Bauteile, Gegenstände und Objekte hergestellt, für die synonym der Begriff "Bauteil" verwendet wird.

Wenn im Rahmen dieser Anmeldung der Begriff "Prozessparameter" oder "Maschinenparameter" verwendet wird, so handelt es sich dabei um die für die Herstellung von Bauteilen an kunststoffverarbeitenden Maschinen erforderlichen Parameter, mit denen derartige Maschinen Bauteile fertigen. In der Regel sind diese Parameter nicht nur, aber insbesondere Druck, Weg eines Fördermittels wie z.B. einer Förderschnecke, wirksame Schneckenlänge, rechnerisches Hubvolumen, Schussgewicht, Materialdurchsatz, Spritzdruck, Nachdruckzeit, Einspritzstrom, Temperatur, Einspritzgeschwindigkeit, Schneckenumfangsgeschwindigkeit, Schneckendrehmoment, Düsenanlagekraft, Heizleistung, Heizzonen, Füllvolumen, Austragsvolumen, Massevolumen, Tropfengröße, Tropfenvolumen, Öffnungs- und Schließkraft einer Formschließeinheit, Werkzeugeinbauhöhe, Plattenabstand der Formträger, lichter Säulenabstand, Maße der Werkzeugaufspannfläche, Gewicht des beweglichen Formträgers, Auswerferkraft, Auswerferweg, Trockenlaufzeit, Maschinenleistung, Energieverbrauch, Bauart und dergleichen.

Wenn im Rahmen dieser Anmeldung der Begriff "Maschineneinheit" verwendet wird, so handelt es sich dabei um Teile und Komponenten einer Maschine zur Verarbeitung von Kunststoffen und anderer plastifizierbarer Massen. Diese Maschineneinheiten können modulartig als unabhängige Baugruppen hergestellt werden und einer Maschine zugeführt werden. So kann es sich im Beispiel einer Kunststoff-Spritzgießmaschine bei Maschineneinheiten z.B. um einen Plastifizierzylinder, eine Schneckenwelle, Antriebseinheiten, eine Formschließeinheit oder eine Spritzgießeinheit oder dergleichen handeln. Gleichartige Maschineneinheiten sind grundsätzlich untereinander austauschbar und können insofern auch im Hinblick auf das jeweils zu fertigende Bauteil in ihrer Beziehung zu anderen Maschineneinheiten optimiert werden.

Wenn im Rahmen dieser Anmeldung von einer "Referenzdatenbank" die Rede ist, so handelt es sich dabei um eine Datenbank, in der im Hinblick auf Maschinen oder Maschineneinheiten referenzierte Daten bereits enthalten sind und/oder eingelernt und/oder eingegeben werden. Diese Referenzmaschinendaten stellen insbesondere einen Bezug zu bereits bestehenden oder gegebenenfalls auch noch herzustellenden Maschinen sowie deren Maschinenparameter her. Es kann sich dabei um Referenzdaten innerhalb eines bestehenden Maschinenparks bei einem Anwender oder um Referenzmaschinendaten von Maschinen handeln, die zum Beispiel Lohnfertiger am Markt zur Verfügung stellen. Zu den Referenzmaschinendaten gehören aber auch die Daten, die eine Herstellung einer neuen Maschine durch den Maschinenhersteller ermöglichen.

Aus den Referenzdaten der Referenzdatenbank hergestellte "Referenzteildatensätze" gestatten eine Zuordnung bestimmter Datensätze zu Maschinenparametern und Prozessparametern, um z.B. bestimmte Geschwindigkeiten oder Drücke im Beispiel einer Spritzgießmaschine beim Einspritzen in einen Formhohlraum zu ermöglichen oder um bei einer Maschine zur additiven Fertigung von Bauteilen z.B. die Bauraumbedingungen oder die Austragsbedingungen anzugeben.

Referenzdaten können auch nach wenigstens einem der folgenden Kriterien nach Klassen geordnet und unterscheidbar sein, die insbesondere umfassen:
- Klassen von Maschineneigenschaften,
- Klassen von Materialeigenschaften,
- Bauteilklassen,
- Werkzeugklassen für Spritzgießwerkzeuge,
- Füllzeitklassen beim Einspritzprozess zur Herstellung des Bauteils,
- Fließweg-Wandstärken-Verhältnisse im Bauteil,
- Kunststoffklassen,
- Materialklassen,

Wenn im Rahmen dieser Anmeldung von "Nutzerdaten" die Rede ist, so handelt es sich dabei um Daten, die es einem Nutzer gestatten, dem Verfahren bzw. dem System so viel an Informationen zur Verfügung zu stellen, dass eine Ausarbeitung einer Konfiguration einer geeigneten Maschine möglich ist. Zu diesen Daten gehören insbesondere die Informationen über das herzustellende Bauteil, zum Beispiel in Form von CAD-Daten, möglichst dreidimensional, oder über eine Form bzw. Kavität eines derartigen Bauteils. Zu den Nutzerdaten gehören insbesondere aber auch, je nach dem, was an Information vorliegt, Informationen über das zu verarbeitende Material oder die entsprechende Materialklasse, Informationen über die Maschine bzw. Soll-Maschinendaten oder über den Prozess wie zum Beispiel Soll-Prozessdaten. Nutzerdaten können aber auch Nutzerpräferenzen umfassen.

Von "Nutzerpräferenz" wird im Rahmen dieser Anmeldung dann gesprochen, wenn der Nutzer Informationen eingeben kann, die zum Beispiel die Herstellungszeit, den Energiebedarf pro Bauteil, die Kosten pro Bauteil oder dergleichen betreffen. Diese Präferenzen sollen vorzugsweise erfüllt werden, können bedarfsweise aber auch vom Nutzer gewichtet oder zurückgestellt werden. Dies ist im Gegensatz dazu zum Beispiel bei den Informationen über das Bauteil und/oder eine Kavität nicht der Fall.

Wenn im Rahmen dieser Anmeldung der Begriff "Expertenwissen" verwendet wird, so handelt es sich dabei um das Wissen, dass einem erfahrenen Bediener einer derartigen Maschine zur Verfügung steht. Dies kann präsentes oder liquides Wissen sein, zum Expertenwissen gehört aber ebenso nicht liquides Wissen, das jedoch z.B. aus der Fachliteratur zugänglich ist. Diesem Wissen liegt insbesondere auch die Kenntnis über Abläufe und Zusammenhänge der an auf diesen Maschinen ablaufenden Prozessen beteiligten Komponenten und über deren Interaktion miteinander zugrunde. Zu diesem Expertenwissen gehört z.B. auch Wissen über die jeweiligen Maschinen und deren Maschinendaten oder deren Aufbau ebenso wie ein Wissen über Materialien und deren Eigenschaften. Das Expertenwissen ermöglicht es einem geschulten Anwender, eine derartige Maschine wenigstens soweit in Betrieb zu nehmen, dass ein Bauteil hergestellt werden kann und die Maschine lauffähig ist. Zum Expertenwissen gehört aber auch all das, was erforderlich ist, um qualitativ hochwertige Bauteile herzustellen.

In vielen Branchen ist ein Trend erkennbar, einem Anwender computergestützt nach seinen Kriterien genau das so konfiguriert anzubieten, wie er es für seine Bedürfnisse braucht. Bei solchen Tools kann der Nutzer seine Auswahlkriterien angeben und bekommt dann vom Tool eine (priorisierte) Trefferliste. Grundsätzlich besteht für Kunststoff oder andere plastifizierbare Materialien verarbeitende Maschinen ein ähnliches Bedürfnis, nämlich für ein individuelles "Verarbeitungs-Szenario" (eine) geeignete(n) Anlage(n) zu finden bzw. die Auswahlmöglichkeiten transparent zu machen, wofür allerdings einige technische Randbedingungen zu berücksichtigen sind.

Im Stand der Technik sind folgende Lösungsansätze bekannt:
Aus der DE 10 2005 047 543 A1 sind ein Verfahren und eine Vorrichtung zur Simulation eines Steuerungs- und/oder Maschinenverhaltens von Werkzeug- oder Produktionsmaschinen bekannt, wobei Daten über die Werkzeug- oder Produktionsmaschinen von dieser zu einer Simulationseinrichtung mittels Intranet und/oder mittels Internet übertragen werden. Bei dem Verfahren werden als Daten Parameterdaten und/oder Konfigurationsdaten und/oder Hardwaredaten und/oder Programmdaten und/oder Performancedaten übertragen. Dabei speichert die Simulationseinrichtung Daten mehrerer Werkzeug- oder Produktionsmaschinen, wobei insbesondere Simulationsergebnisse zumindest zweier Werkzeug- oder Produktionsmaschinen miteinander automatisch verglichen werden. Die Simulationseinrichtung verarbeitet Simulationsergebnisse derart weiter, dass nach der Simulation zumindest zweier Maschinen eine Werkzeug-oder Produktionsmaschine zur Nutzung vorgeschlagen wird.

Aus der DE 10 2018 111 603 A1 ist ein Verfahren zum Konfigurieren eines Roboter-gestützten Bearbeitungssystems bekannt, bei dem ausgehend von einem aufgabenbezogenen Bearbeitungsplan mit mehreren Aspekten der Bearbeitung ein Bearbeitungssystem konfiguriert wird. Der Bearbeitungsplan wird dazu an einen netzbasierten Konfigurator übermittelt und in mehrere Aspekte aufgegliedert. Für jeden Aspekt des Bearbeitungsplans wird ein notwendiger Konfigurationsbaustein ausgewählt und das für den Baustein notwendige Betriebssystem aus einer Cloud geladen und im jeweiligen Konfigurationsbaustein abgespeichert. Der so erstellte Konfigurationsplan wird an das Bearbeitungssystem übermittelt. Alle im Betriebssystem vorhandenen Konfigurationsbausteine werden in einer zentralen Steuerung betriebsfertig gekoppelt und das konfigurierte Bearbeitungssystem wird in Betrieb genommen.

Aus der EP 1 804 997 B1 ist ein intelligentes Formsystem bekannt, das Daten nutzt, die direkt mit einer Formumgebung oder einer bestimmten Form verbunden sind. Die zugänglichen Daten, die typischerweise lokal in einer Speichervorrichtung in der Form gespeichert oder über ein HMI eingegeben werden, identifizieren Parameter, die für die Einrichtung der Form und den Betrieb der Maschine wichtig sind. Nach Erhalt solcher Daten konfiguriert eine Maschinensteuerung eine Formmaschine auf eine anfängliche Einstellung, die durch die Daten definiert ist und als nahe an einem optimalen Betriebszustand für die Form angesehen wird. Die Daten für die Werkzeugeinrichtung können Informationen über ein Füllprofil für einen geformten Gegenstand enthalten, der in verschiedene Zonen mit unterschiedlichen Dicken und Geometrien unterteilt ist. Gewichtungsfaktoren für die verschiedenen Zonen kompensieren die unterschiedlichen Kühl- und Fließeigenschaften. Der Speicher kann auch dazu verwendet werden, historische Daten über den Betrieb des Werkzeugs, Einstellungen und Alarme zu speichern. Beschrieben wird die Übertragung von Prozessparametern eines Prüfstandes auf eine Maschine, wobei die Eignung der Maschine nicht abgeschätzt bzw. bewertet wird.

Die US 2001/0051858 A1 beschreibt ein Verfahren zum Einstellen von Parametern in einer Spritzgießmaschine, wobei Daten einer Füllsimulation verwendet werden. um eine Datenbank mit einer Beziehung zwischen den maschinenseitigen Parametern und der Produktqualität des Spritzgießbauteils zu erstellen. Die erstellte Datenbank kann dann in einem neuronalen Netz verwendet werden.

Aus der EP 3 291 959 A1 ist ein Verfahren zur Ermittlung und Darstellung von Prozessparameterwerten eines Spritzgießprozesses in einem Spritzgießwerkzeug bekannt. Bei diesem Verfahren werden Geometriedaten für das Spritzgießwerkzeug und/oder ein in dem Spritzgießwerkzeug zu produzierendes Formteil ermittelt. Anschließend wird ein Spritzgießvorgang mit dem Spritzgießwerkzeug durchgeführt und Messwerte in Abhängigkeit von einer Einspritzzeit und/oder einer Aktorposition erfasst. Weiterhin wird in Abhängigkeit von der Einspritzzeit und/oder der Aktorposition eine Fließfrontposition innerhalb des Spritzgießwerkzeugs bzw. des Formteils und optional eine Fließfrontgeschwindigkeit als Prozessparameterwerte auf Basis der Messwerte und der Geometriedaten ermittelt. Optional können weitere Prozessparameterwerte in Abhängigkeit von der Einspritzzeit und/oder der Aktorposition und/oder der Fließfrontposition ermittelt werden. Zumindest ein Teil der ermittelten Prozessparameterwerte wird in Abhängigkeit von der Einspritzzeit und/oder der Aktorposition und/oder der Fließfrontposition auf einer Anzeigevorrichtung angezeigt. Die so gewonnen Informationen werden nicht weiter verwendet.

In der WO 2014/183863 A1 wird ein Verfahren zum Betreiben einer Spritzgießmaschine zur Verarbeitung von Kunststoffen mit einer Formschließeinheit zum Öffnen und Schließen einer Spritzgießform mit wenigstens einem Formhohlraum zur Herstellung eines Spritzteils, mit einer Spritzgießeinheit zum Plastifizieren und Einspritzen des plastifizierbaren Materials in den Formhohlraum und mit einer Steuerung zum Betrieb der Spritzgießmaschine beschrieben. In der Steuerung ist ein Expertenwissen über den Betrieb der Spritzgießmaschine und ihre eventuell vorhandenen Peripheriegeräte sowie über die Herstellung von Spritzteilen in der Spritzgießtechnik hinterlegt, um ein Spritzteil unter bedarfsweisem interaktivem Kontakt mit einem Bediener anhand von Spritzgießparametern herzustellen. Durch Bereitstellen von Informationen über das Bauteil oder den Formhohlraum können die für die Herstellung des Spritzteils erforderliche Anlagen- und Prozessparameter durch die Steuerung berechnet werden, d.h. die Maschine stellt sich auf eine optimale Parametrisierung bei bekannter Maschine ein.

Die US 2002/0188375 A1 offenbart ein Verfahren, bei dem die Formgebungsbedingungen einer Spritzgießmaschine durch die Durchführung einer virtuellen Formgebung mittels CAE (computer aided engineering) festgelegt werden. Zunächst wird die tatsächliche Formgebung unter vorläufigen Formbedingungen durchgeführt, um ein tatsächliches Profil zu erhalten, das die während mindestens eines Einspritzschritts der tatsächlichen Formgebung tatsächlich gemessene Veränderung des Lastdrucks zeigt. Anschließend wird mit CAE ein virtuelles Spritzgießen unter Verwendung der vorläufigen Formbedingungen durchgeführt, um ein virtuelles Profil zu erhalten, das die Veränderung des Lastdrucks zeigt, die während mindestens eines Einspritzschritts des virtuellen Spritzgießens simuliert wird. Die vorläufigen Formbedingungen werden von CAE so geändert, dass das virtuelle Profil mit dem tatsächlichen Profil übereinstimmt, um so Zwischenformungsbedingungen zu erhalten. Anschließend werden die Zwischenformbedingungen optimiert, um reale Formgebungsbedingungen für die Spritzgießmaschine zu erhalten. Damit wird eine Anpassung und somit Verbesserung von virtuellen Daten im Rahmen eines realen Produktionsprozesses erreicht.

Aus der EP 1 302 823 B1 ist ein Verfahren zur rechnergestützten Planung einer Anlage der Grundstoffindustrie, insbesondere einer hüttentechnischen Einrichtung, mit einem Bereitstellen von Anlagendaten in einer Datenstruktur und einer Eingabe von nutzerspezifischen Daten und/oder Vorgaben über eine Nutzerschnittstelle durch einen berechtigten Nutzer bekannt. Eine Konfiguration der Anlage erfolgt durch Verknüpfen von nutzerspezifischen Daten und/oder Vorgaben mit in der Datenstruktur vorhandenen Anlagendaten mittels die Anlagen und/oder die angewandten Prozesse beschreibenden Modellen. Das Ergebnis ist eine Ausgabe eines konfigurierten Produktes in Form eines strukturierten Konfigurationsvorschlages. Das Verfahren beschreibt eine Konfiguration einer Anlage auf Basis von einzugebenden Zieldaten, jedoch ohne Auswahl auf Basis simulierter Werkzeug- bzw. Produktdaten.

Die DE 10 2020 107 524 A1 offenbart ein Spritzgieß-Analyseverfahren zur Erzeugung einer Analysebedingung einer Spritzgießmaschine unter Verwendung wenigstens eines Computers, wobei der wenigstens eine Computer folgende Schritte ausführt: Auswählen einer Spritzgießmaschine, wobei den Spritzgießmaschinen jeweils ein vorgegebener Korrekturbetrag für das Spritzgießen zugeordnet wird, Erzeugen einer zweiten Analysebedingung für die ausgewählte Spritzgießmaschine auf der Grundlage einer erhaltenen ersten Analysebedingung und des vorgegebenen Korrekturbetrags der ausgewählten Spritzgießmaschine und Ausgeben der erzeugten zweiten Analysebedingung. Das Verfahren beschreibt damit das Erzeugen eines Korrekturfaktors, auf dessen Basis eine ausgewählte Spritzgießmaschine betrieben werden kann.

Die US 2005/0114104 A1 betrifft ein Verfahren und eine Vorrichtung zum Analysieren einer Fluidströmung unter Berücksichtigung von Wärmeübertragungseffekten und insbesondere einer Phasenänderung von einem geschmolzenen Zustand zu einem festen Zustand. Insbesondere können Verfahren und Vorrichtung auf die Analyse eines Spritzgussverfahrens zum Herstellen einer geformten Polymerkomponente aus einem Polymer angewendet werden. In einer Ausführungsform kann das Verfahren zur Bestimmung des Drucks, der erforderlich ist, um einen Formhohlraum zu füllen, und von Druckgradienten verwendet werden, die während des Füllens des Hohlraums einer Spritzgussform eingeführt werden. Die Ergebnisse dieser Analysen können verwendet werden, um die Anzahl und Position von Anschnitten zu bestimmen, um das beste Material für die Komponente zu bestimmen und die im Formgebungsverfahren verwendeten Prozessbedingungen zu optimieren.

Das in der DE 10 2013 008 245 A1 beschriebene Verfahren dient zum Betreiben einer Spritzgießmaschine zur Verarbeitung von Kunststoffen, die eine Formschließeinheit mit wenigstens einem Formhohlraum, eine Spritzgießeinheit und eine Steuerung zum Betrieb der Spritzgießmaschine aufweist. In der Steuerung ist ein Expertenwissen über den Betrieb der Spritzgießmaschine und ihre eventuell vorhandenen Peripheriegeräte sowie über die Herstellung von Spritzteilen in der Spritzgießtechnik hinterlegt, um ein Spritzteil unter bedarfsweise interaktivem Kontakt mit einem Bediener an Hand von Spritzgießparametern herzustellen. Dadurch, dass in weiteren Schritten Informationen über das Bauteil oder den Formhohlraum der Steuerung bereitgestellt werden, können die für die Herstellung des Spritzteils erforderlichen Parameter durch die Steuerung berechnet werden, so dass eine bedienerfreundliche Einrichtung einer Maschine zur Verarbeitung von Kunststoffen zur Verfügung gestellt wird.

Die US 2002/0193972 A1 offenbart ein Werkstatt-Einrichtungs-/Entwurfs- und -Betriebsverfahren zum Simulieren einer virtuellen Werkstatt, die ein Datenmodell einer zumindest teilweise neu organisierten Werkstatt ist. Dabei wird durch die virtuelle Werkstatt eine Quasi-Produktionsaktivität durchgeführt, um einen Produktionszustand und einen physischen Transportzustand des hergestellten Produkts zu verifizieren. Anschließend wird eine reale Werkstatt aufgebaut, die mit der verifizierten virtuellen Werkstatt übereinstimmt. Die gebaute tatsächliche Werkstatt wird fernüberwacht und ein Ergebnis dieser Überwachung wird mit einem Ergebnis einer Verifizierung während eines virtuellen Werkstattverifizierungsprozesses verglichen. Auf diese Weise kann die Verifizierung der gesamten Werkstatt so durchgeführt werden, dass Werkstatteinsätze wie Neueinrichtung und Änderung einer effizient und schnell in kurzer Zeit durchgeführt werden können.

Aus der DE 103 52 815 A1 ist ein Simulationsverfahren für eine Bearbeitung eines Werkstücks durch eine Werkzeugmaschine bekannt. Einem Rechner wird ein Anwendungsprogramm vorgegeben, das eine Bearbeitung eines Werkstücks durch eine Werkzeugmaschine in Anweisungsschritten beschreibt. Der Rechner ermittelt unter Abarbeitung des Anwendungsprogramms anhand eines Simulationsprogramms für eine Steuerung der Werkzeugmaschine schrittweise maschinenabhängige Steuerbefehle für die Werkzeugmaschine. Er ermittelt anhand eines rechnerinternen Modells der Werkzeugmaschine und der ermittelten maschinenabhängigen Steuerbefehle erwartete Istzustände der Werkzeugmaschine und simuliert so die Ausführung der maschinenabhängigen Steuerbefehle. Das Simulationsprogramm ist als Steuerungssoftware ausgebildet. Es ermittelt die maschinenabhängigen Steuerbefehle in Abhängigkeit von einer virtuellen Zeitbasis, die von der realen Zeit unabhängig ist.

Die US 2017/0308057 A1 betrifft ein computerimplementiertes Verfahren zur Teileanalyse, insbesondere zur Analyse der Qualität des Bearbeitungsprozesses und vorzugsweise des Konstruktionsprozesses eines Werkstücks, das von mindestens einer CNC-Maschine bearbeitet wird. Gemäß diesen Aspekten kann das Verfahren das Bereitstellen eines digitalen Maschinenmodells der CNC-Maschine mit Echtzeit- und Nicht-Echtzeit-Prozessdaten der mindestens einen CNC-Maschine umfassen, wobei die Echtzeit- und Nicht-Echtzeit-Prozessdaten während des Bearbeitungsprozesses der CNC-Maschine aufgezeichnet werden. Anschließend erfolgt das Simulieren des Bearbeitungsprozesses mittels des digitalen Maschinenmodells basierend zumindest teilweise auf den erfassten Echtzeit- und Nicht-Echtzeit-Prozessdaten.

Ausgehend von diesem Stand der Technik liegt der vorliegenden Erfindung die Aufgabe zugrunde, einem Anwender möglichst wenigstens eine Maschine für seine Anwendung bereitzustellen, die dafür nach den gegebenen Umständen am besten geeignet ist.

Dies wird durch ein Verfahren bzw. ein System mit den Merkmalen des Anspruchs 1 bzw. des Anspruchs 10 sowie durch eine Maschinensteuerung mit den Merkmalen des Anspruches 17 als auch durch ein Computerprogrammprodukt mit den Merkmalen des Anspruches 18 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Das computerimplementierte Verfahren dient der Bestimmung wenigstens einer Maschine zur Verarbeitung von Kunststoffen und anderer plastifizierbarer Materialien, welche Maschine zur Herstellung eines zu fertigenden Bauteils vorzugsweise am besten geeignet ist. Diese Bestimmung erfolgt auf der Grundlage von für eine Produktion des wenigstens einen Bauteils bestimmten und/oder bestimmbaren Kriterien. Dazu wird eine Referenzdatenbank mit Referenzmaschinendaten bereitgestellt, die insbesondere zur Bestimmung von Maschinenparametern erforderliche Referenzteildatensätze umfasst, wobei jedem Referenzteildatensatz Maschinenparameter zugeordnet sind.

Bereitgestellt werden zudem Nutzerdaten als bestimmte und/oder bestimmbare Kriterien über eine Nutzerschnittstelle in einem Datenspeicher, welche Nutzerdaten für die Herstellung des wenigstens einen Bauteils erforderliche Daten, insbesondere CAD-Daten umfassen. Die Nutzerdaten umfassen ferner wenigstens eine Gruppe der Daten umfassend zumindest Materialkenndaten, Soll-Maschinenkenndaten und/oder Soll-Prozessdaten.

Auf der Grundlage der so bereitgestellten Referenzdatenbank und Nutzerdaten wird eine Simulation zur Herstellung des wenigstens einen Bauteil auf einer Maschine unter Generierung von Simulationsdatensätzen durchgeführt. Zusätzlich oder alternativ kann auch ein Simulationsdatensatz verwendet werden, der bereits bei der oder für die Herstellung wenigstens eines Bauteils auf der Maschine generiert wurde. Diese Simulationsdatensätze werden nun zur Extraktion von Teildatensätzen segmentiert, um dadurch die Zuordnung zu den maschinenseitigen Parametern zu erreichen, mit denen eine Maschine zur Herstellung des wenigstens einen Bauteil zu betreiben ist.

Die so ermittelten Teildatensätze werden mit den Referenzteildatensätzen auf der Referenzdatenbank auf Teilübereinstimmungen abgeglichen, insbesondere um dadurch Prozessparameter und Maschinenparameter zu erhalten, die es gestatten, genauer zu definieren, wie eine geeignete Maschine oder Maschineneinheit zu konfigurieren bzw. aufzubauen ist. Aufgrund der Teilübereinstimmungen führt dies zur Ausgabe einer Mindestanforderung an eine für die Herstellung des wenigstens einen Bauteils geeignete Maschine oder Maschineneinheit.

Nun werden zumindest wenigstens zwei der Elemente - die aber auch noch weiteren Elemente umfassen können -, umfassend die Nutzerdaten, die Simulationsdatensätze, die Teildatensätze und die Mindestanforderungen aus verschiedenen Maschinen eingesammelt. Daraus werden, gruppiert nach gleichen oder ähnlichen Maschinenkonfigurationen, gleichen Prozessen und/oder gleichen oder ähnlichen zu verarbeitenden Materialien, Cluster gebildet und diese Cluster werden ausgewertet, um durch federated learning Maschinen mit einer infolge von Ergebnissen der Auswertung angepassten Mindestanforderung zu betreiben. Vorteilhaft werden mit Hilfe des "federated learning", also im Sinne von "Schwarmintelligenz" bzw. "Schwarmwissen", noch bessere Algorithmen und somit ein noch besseres und zuverlässigeres Modell zur Bestimmung einer geeigneten Maschine erhalten. Das Verfahren ist damit dazu geeignet, es auf mehreren Maschinen durchzuführen und dadurch insbesondere bei gleichen Maschinenkonfigurationen, gleichen Prozessen und/oder gleichen zu verarbeitenden Materialien Cluster zu bilden und auszuwerten. Durch die so gewonnene erhöhte Datenmenge können die in der Ergebnisdatenbank vorliegenden Ergebnisse noch weiter geschärft werden.

Da aus den Referenzmaschinendaten bzw. den im Maschinenpark oder am Markt verfügbaren Informationen entnehmbar ist, welche Maschinen mit welcher Konfiguration bzw. welche Maschineneinheiten am Markt verfügbar sind (diese Informationen liegen den Referenzmaschinendaten zugrunde), kann nun ein Abgleich der Mindestanforderung mit den verfügbaren Maschinen oder Maschineneinheiten erfolgen. Dieser Abgleich führt zur Bestimmung wenigstens einer, vorzugsweise mehrerer, gegebenenfalls auch nach bestimmten Kriterien zu priorisierender, zur Herstellung des wenigstens einen Bauteils geeigneten Maschine oder Maschineneinheit. Diese Maschine oder Maschineneinheit wird dann zur Herstellung des wenigstens einen Bauteils betrieben.

Vorteilhaft werden also Informationen, wie sie insbesondere den Simulationsdaten zugrunde liegen und heute bereits verbreitet eingesetzt werden, dazu genutzt, um daraus eine geeignete Maschine bzw. Maschineneinheit zu konfigurieren bzw. ausfindig zu machen. Diese Simulationsergebnisse sind der Ausgangspunkt, um diese Simulationsergebnisse mit der Auslegung einer Maschine in Verbindung zu bringen und damit die für die Herstellung des wenigstens einen Bauteils am besten geeignete/n Maschine/n oder Maschineneinheit/en zu finden bzw. ein Ranking der am Markt oder in einem Maschinenportfolio verfügbaren Maschinen zu erstellen.

Vorteilhaft erfolgt also die Optimierung der Maschinenauswahl ausgehend vom zu fertigenden Bauteil bzw. dessen Form oder der dem Bauteil zugrunde liegenden Kavität. Dadurch kann sichergestellt werden, dass diejenige Maschine aus einem bestehenden Maschinenportfolio ausgewählt oder beschafft wird, die am besten zu dem entsprechenden Bauteil bzw. vorzugsweise dem zugehörigen Spritzgießwerkzeug passt. Vorteilhaft ist auf der Grundlage der geeigneten Segmentierung der Eingangsdaten es also auch für einen unerfahrenen Bediener möglich, eine Maschinenauswahl in einer einfachen und anschaulichen Art und Weise durchzuführen.

Vorzugsweise erfolgt die Bestimmung einer geeigneten Maschine oder Maschineneinheit entweder durch eine Auswahl aus einem Maschinenportfolio eines Maschinenparks eines Betreibers, wobei die Maschinen oder Maschineneinheiten auch an verschiedenen Standorten vorhanden sein können, und/oder, wenn eine geeignete Maschine bei wenigstens einem Anbieter am Markt vorhanden ist, ggf. dadurch, dass eine Herstellung des herzustellenden Bauteils zur Fertigung auf einer geeigneten Maschine des wenigstens einen Anbieters vorgeschlagen wird. Der letzte Fall betrifft insbesondere die Vergabe der Herstellung an einen Lohnfertiger, der gerade die geeignete Maschine in Betrieb hat. Vorteilhaft werden dadurch einfache Möglichkeiten geschaffen, aus einer Auswahl von vorhandenen Maschinen eine nicht nur passende, sondern nach bestimmten und/oder bestimmbaren Kriterien am besten für die Herstellung des jeweils zu fertigenden Bauteils geeignete Maschine auszuwählen.

Bevorzugterweise kann nach Bestimmung einer geeigneten Maschine oder Maschineneinheit auch eine geeignete Maschine vom Hersteller konfiguriert und im Anschluss hergestellt werden. Dies ist insbesondere dann der Fall, wenn selbst nach Abwägung und entsprechender Gewichtung der Kriterien man zu dem Ergebnis kommt, dass eine Herstellung des herzustellenden Bauteils auf den bestehenden bzw. dem jeweiligen Anwender verfügbaren Maschinen nicht möglich ist. In diesem Fall ist vorteilhaft die Herstellung einer speziell für das Bauteil geeigneten Maschine ein alternativer Weg.

Vorzugsweise besteht auch die Möglichkeit, dass nach Bestimmung einer geeigneten Maschine oder Maschineneinheit global oder regional ermittelt wird, wo sich geeignete Maschineneinheiten befinden, um dann eine Maschine zur Herstellung des Bauteils aufzubauen. Vorteilhaft ist dabei denkbar, dass gerade dann, wenn es auf eine schnelle Fertigung von Bauteilen ankommt, es sinnvoller ist, nach geeigneten Maschineneinheiten weltweit am Markt zu suchen. Eventuell ist für eine Maschine in Asien - die im Beispiel einer Spritzgießmaschine, eine große Formschließeinheit und eine große Plastifiziereinheit aufweist - eine für das jetzt herzustellende Bauteil kleinere Plastifiziereinheit beim Hersteller nur mit entsprechender Lieferzeit zu liefern. Global am Markt lässt sich jedoch eventuell eine passende Plastifiziereinheit in Nordamerika ausfindig machen, die kurzfristig nach Asien geliefert werden kann, um dort die Maschine schnell umzubauen und damit das Bauteil fertigen zu können.

Bevorzugterweise können die Nutzerdaten auch Nutzerpräferenzen umfassen, die mittels einer Reglereinheit linear oder diskret auf Basis eines definierten Parametersatzes festlegbar sind. Damit kann eine Änderung der Mindestanforderung auf Basis der Nutzerpräferenzen analysiert und ausgegeben werden. Vorteilhaft kann der Nutzer damit zum einen die maschinenseitigen oder prozessseitigen Nutzerdaten gewichten, zum anderen kann er aber auch zusätzliche Nutzerpräferenzen einführen, die insbesondere "weiche" Faktoren betreffen wie z.B. die Kosten pro Bauteil, die Geschwindigkeit pro Bauteil oder die Energiekosten pro Bauteil oder dergleichen. Vorteilhaft finden diese Informationen damit Eingang in die Auswahl einer geeigneten Maschine. Dadurch können Bauteile auf einer Maschine schneller und mit geringeren Energiekosten hergestellt werden.

Beim Segmentieren der Simulationsdatensätze werden die vorliegenden Nutzerdaten nur teilweise verwendet. Um die weiteren Nutzerdaten dann vorzugsweise zusätzlich oder gesondert zur Bestimmung der geeigneten Maschine zu nutzen, können diese zusätzlich oder gesondert zur Extraktion von Teildatensätzen nochmals segmentiert werden. Auch diese Teildatensätze werden Maschinenparametern zugeordnet, um dadurch vorteilhaft die Auswahl der geeigneten Maschine zu optimieren. Durch die Segmentierung der Nutzerdaten zusätzlich oder gesondert zur Extraktion von Teildatensätzen können damit zusätzliche Informationen gewonnen werden, die Einfluss auf die Maschinenparameter nehmen, die wiederum die Auswahl der geeigneten Maschine bestimmen.

Vorzugsweise wird das Verfahren auf eine Spritzgießmaschine oder auf eine Maschine zur additiven Fertigung von Bauteilen angewandt. Vorteilhaft liegen gerade für derartige Maschinen entsprechende Ergebnisse von Simulationen in solch einem Umfang vor, dass ohne weitere Kosten auf derartige Ergebnisse zugegriffen werden kann, die den Ausgangspunkt für die Bestimmung der geeigneten Maschine darstellen.

Bevorzugterweise wird als Simulation zur Herstellung des wenigstens einen Bauteils eine Füllsimulation für die Füllung eines Formhohlraums eines Spritzgießwerkzeugs/einer Werkzeugeinheit oder eine Simulation eines Bauteilaufbaus bei einer additiven Fertigung und/oder einer Strömungssimulation eines Plastifizier Prozesses des plastifizierbaren Materials in einer Plastifiziereinheit verwendet. Derartige Simulationen werden beim Engineering von Formwerkzeugen sowie bei der additiven Fertigung bereits verbreitet für die Auslegung von Spritzgießwerkzeugen und Formwerkzeugen verwendet. Durch sie lässt sich ein bestimmtes "Herstellungsszenario" oder "Spritzgießszenario" in eine hierfür geeignete Werkzeugeinheit oder ein hierfür geeignetes Spritzgießwerkzeug überführen. Diese Simulationsergebnisse sind damit der Ausgangspunkt, um (Spritzgieß-) Werkzeugseitige bzw. bauteilseitige Simulationsergebnisse mit der Auslegung z.B. der Plastifizierschnecke und Maschine zu verbinden. Dies alles mit dem Ziel, vorteilhaft die für die Herstellung des jeweiligen Bauteils am besten geeignete Maschine oder Maschineneinheit ausfindig zu machen.

Die Optimierung der Maschinenauswahl kann damit ausgehend vom (Spritzgieß-) Werkzeug bzw. zu fertigendem Bauteil erfolgen. Für jedes Spritzgießwerkzeug bzw. Bauteil ist es z.B. bezogen auf seine prozesstechnischen Eigenschaften möglich, die ideale bzw. bestmöglich passende Maschine auf dem Markt befindlich oder in einem definierten Maschinenpark zu finden oder einen geeigneten Lohnfertiger auf Basis seines Maschinenparks zu bestimmen. Vorteilhaft werden die Simulationsergebnisse des Formenbaus in den Auswahlprozess einer geeigneten Spritzgießmaschine überführt.

Vorzugsweise wird der Referenzdatenbank ein selbstlernendes System zugeordnet, sodass vorteilhaft Informationen für geeignete Maschinen oder Maschineneinheiten in Verbindung mit zugehörigen Nutzerdaten der Referenzdatenbank für zukünftige Auswertungen und Bewertungen zur Verfügung gestellt werden.

Vorzugsweise können die Ergebnisse der Auswertung eines federated learning zumindest teilweise miteinander, vorzugsweise cloud-basiert, zum Ermitteln von Vergleichsergebnissen genutzt werden, Der Betreiber von derartigen Anlagen kann einen so generierten Algorithmus aus seiner "Modellfabrik" auf andere Produktionsstandorte ausrollen und erhält überall die gleich gute Maschinenauswahlmöglichkeiten bei gleichzeitigem Know-how-Schutz.

Bevorzugterweise können die so erzeugten Algorithmen zumindest auszugsweise auch dem Maschinenhersteller zur Verfügung gestellt werden, sodass vorteilhaft mit derartigen Informationen die vom Hersteller bereitgestellten Modelle sowie das Expertenwissen weiter geschärft werden können.

Die genannte Aufgabe wird auch durch ein computerimplementiertes System zur Bestimmung wenigstens einer Maschine zur Verarbeitung von Kunststoffen und anderer plastifizierbarer Materialien gelöst, das auf Grundlage von für eine Produktion von wenigstens einem Bauteil bestimmten und/oder bestimmbaren Kriterien wenigstens eine geeignete Maschine bestimmt. Das System weist dazu eine Referenzdatenbank mit Referenzmaschinendaten auf, die zur Bestimmung von Maschinenparametern Referenzteildatensätzen zuordenbar sind; eine Nutzerschnittstelle, die dazu eingerichtet ist, die oben erläuterten Nutzerdaten in einem Datenspeicher bereitzustellen; eine Simulationseinheit, die dazu eingerichtet ist, auf der Grundlage der Nutzerdaten die Herstellung des wenigstens einen Bauteils auf einer Maschine unter Generierung von Simulationsdatensätzen zu simulieren und/oder eine Einleseeinheit, die dazu eingerichtet ist, bereits vorhandene auf einer oder für eine Maschine generierte Simulationsdatensätze einzulesen; eine Segmentiereinheit, die dazu eingerichtet ist, die Simulationsdatensätze zur Extraktion von Teildatensätzen im oben erläuterten Umfang zu segmentieren; einer ersten Mustervergleichseinheit, die dazu eingerichtet ist, die Teildatensätze mit den Referenzdatensätzen auf Teilübereinstimmungen zu vergleichen; eine Analyseeinheit, die dazu eingerichtet ist, eine Mindestanforderung an eine Maschine oder Maschineneinheit bei der Herstellung wenigstens eines Bauteils aufgrund der Teilübereinstimmungen zu bestimmen und an eine Ausgabeeinheit auszugeben; eine zweite Mustervergleichseinheit, die dazu eingerichtet ist, zumindest aus wenigstens zwei der Elemente, umfassend die Nutzerdaten, die Simulationsdatensätze, die Teildatensätze (TDS) und die Mindestanforderungen (MA) - ggf. aber auch noch andere Elemente - aus verschiedenen Maschinen einzusammeln und daraus, gruppiert nach gleichen oder ähnlichen Maschinenkonfigurationen, gleichen Prozessen und/oder gleichen oder ähnlichen zu verarbeitenden Materialien, Cluster zu bilden und diese Cluster auszuwerten, um durch federated learning Maschinen mit einer infolge von Ergebnissen der Auswertung angepassten Mindestanforderung (MA) zu betreiben; wobei die zweite Mustervergleichseinheit dazu eingerichtet ist, die Mindestanforderung mit den aus den Referenzmaschinendaten ermittelten, verfügbaren Maschinen oder Maschineneinheiten zur Bestimmung wenigstens einer geeigneten Maschine oder Maschineneinheit abzugleichen. Das System umfasst auch eine geeignete Maschine oder Maschineneinheit, auf der das wenigstens eine Bauteil gemäß der Mindestanforderung herzustellen ist.

Vorteilhaft gestattet das System es damit, einem unerfahrenen Anwender, ausgehend von dem Bauteil und/oder dessen Form oder einer Kavität, in der das Bauteil hergestellt werden soll, eine nutzer- und maschinenorientierte und gegebenenfalls auch -optimierte Auswahlmöglichkeit an geeigneten Maschinen oder Maschineneinheiten zur Verfügung zu stellen.

Eine geeignete Maschine kann vorteilhaft im eigenen Maschinenpark oder bei einem Lohnfertiger am Markt vorhanden sein oder es kann sich vorzugsweise ergeben, dass eine geeignete Maschine oder Maschineneinheit beim Hersteller zu konfigurieren oder herzustellen ist. Es werden damit die Voraussetzungen geschaffen, eine Maschine mit ihrem technischen Umfeld und ihren technischen Voraussetzungen auszuwählen, die so ausgestattet ist, dass das herzustellende Bauteil bestmöglich oder zumindest so gut wie möglich auf der hierfür geeigneten Maschine herzustellen ist.

Vorzugsweise ist ein globales oder regionales Suchsystem vorgesehen, dass dazu eingerichtet ist, nach Bestimmung einer geeigneten Maschine oder Maschineneinheit global oder regional, z.B. in einem vorgegebenen Umkreis, zu ermitteln, wo sich geeignete Maschinen oder Maschineneinheiten befinden, um eine Maschine zur Herstellung des wenigstens einen Bauteils aufzubauen. Vorteilhaft kann dies eine schnellere Herrichtung einer Maschine gestatten, wenn global oder regional ermittelt werden kann, wo auf der Welt geeignete Maschineneinheiten zu beschaffen sind, um dann gegebenenfalls vor Ort eine noch nicht vollständig geeignete Maschine umzubauen oder eine geeignete Maschine aufzubauen.

Bevorzugterweise können über eine Nutzerschnittstelle Nutzerpräferenzen eingegeben werden. Diese Nutzerpräferenzen können über eine Reglereinheit linear oder diskret auf Basis eines definierten Parametersatzes festgelegt werden. Mit anderen Worten ist eine Gewichtung der Nutzerpräferenzen und damit sowohl der Nutzerdaten als auch weicher Faktoren möglich, die zum Beispiel eine schnellere und energieoptimierte Herstellung des Bauteils vorteilhaft ermöglichen. Die Nutzerpräferenzen finden dann entsprechenden Eingang in die Mindestanforderung an die geeignete Maschine.

Vorzugsweise ist die Segmentiereinheit dazu eingerichtet, nicht nur die Simulationsdatensätze und die damit verknüpften Nutzerdaten, sondern auch die Nutzerdaten zusätzlich oder gesondert zur Extraktion von Teildatensätzen zu segmentieren. Vorteilhaft können damit zusätzliche Informationen gewonnen werden, die Einfluss auf die Maschinenparameter nehmen, die die Auswahl der geeigneten Maschine bestimmen. Dies gilt insbesondere und gerade für die Nutzerpräferenzen. Durch die Segmentierung der Nutzerdaten können zusätzlich oder gesondert zur Extraktion von Teildatensätzen zusätzliche Informationen gewonnen werden, die Einfluss auf die Maschinenparameter nehmen, die wiederum die Auswahl der geeigneten Maschine bestimmen.

Bevorzugterweise ist das System an einer Spritzgießmaschine oder an einer Maschine zur additiven Fertigung von Bauteilen vorgesehen. Gerade bei diesen Maschinen liegen entsprechende Tools in bewährter Form vor, die Simulationsdatensätze bereitstellen können. Diese Simulationsdatensätze können vorteilhaft durch die den Nutzerdaten zugrunde liegenden Rahmenbedingungen in reale Maschinenparameter übersetzt werden.

Vorzugsweise sind geeignete und bewährte Simulationen eine Füllsimulation für die Füllung eines Formhohlraums eines (Spritzgieß-)Werkzeugs oder einer Werkzeugeinheit oder eine Simulation eines Bauteilaufbaus bei einer additiven Fertigung und/oder eine Strömungssimulation eines Plastifizierprozesses des plastifizierbaren Materials in einer Plastifiziereinheit. Hierfür gibt es zuverlässige Lösungen, die damit vorteilhaft auch einen qualitativ guten Ausgangspunkt bilden, um ein gutes Auswahlergebnis zu erzielen.

Bevorzugterweise ist der Referenzdatenbank ein selbstlernendes System zugeordnet, das vorteilhaft dafür geeignet ist, auch bereits ermittelte Ergebnisse nochmals zu segmentieren und zu gruppieren, um sie dadurch auch für künftige Anwendungen zugänglich zu machen.

Die genannte Aufgabe wird auch durch eine Maschinensteuerung für eine Maschine zur Verarbeitung von Kunststoffen und anderer plastifizierbaren Masen gelöst, die dazu eingerichtet, ausgeführt und/oder konstruiert ist, das Verfahren auszuführen.

Ebenso wird die Aufgabe durch ein entsprechendes Computerprogrammprodukt mit einem Programmcode gelöst, der auf einem Computer lesbaren Medium gespeichert ist und zur Durchführung des Verfahrens geeignet ist.

Weitere Vorteile ergeben sich aus den weiteren Unteransprüchen und der nachfolgenden Beschreibung eines Ausführungsbeispiels.

Im Folgenden wir die Erfindung anhand eines in den Figuren dargestellten Ausführungsbeispiels näher erläutert. Es zeigen:
- Fig. 1: eine schematische Darstellung einer Maschine am Beispiel einer Spritzgießmaschine,
- Fig. 2: eine schematische Darstellung eines Systems zum Bestimmen wenigstens einer Maschine,
- Fig. 3: ein schematisches Ablaufdiagramm des Verfahrens,
- Fig. 4: ein Schaubild einer Prozesserweiterung.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

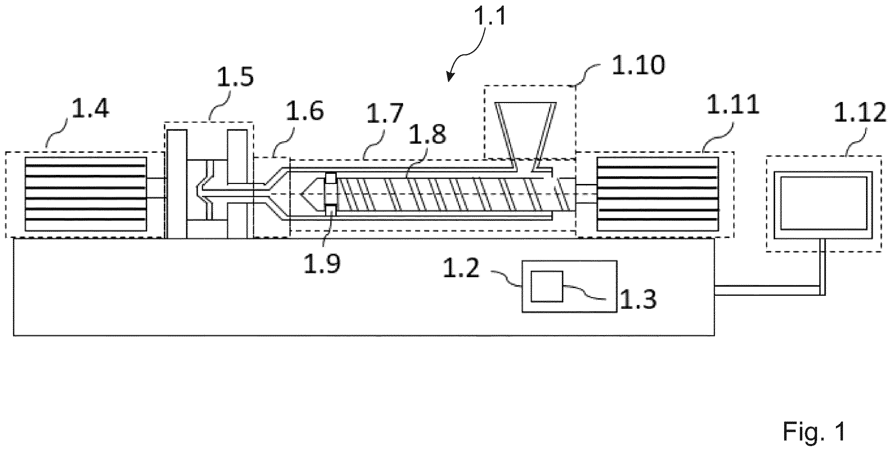

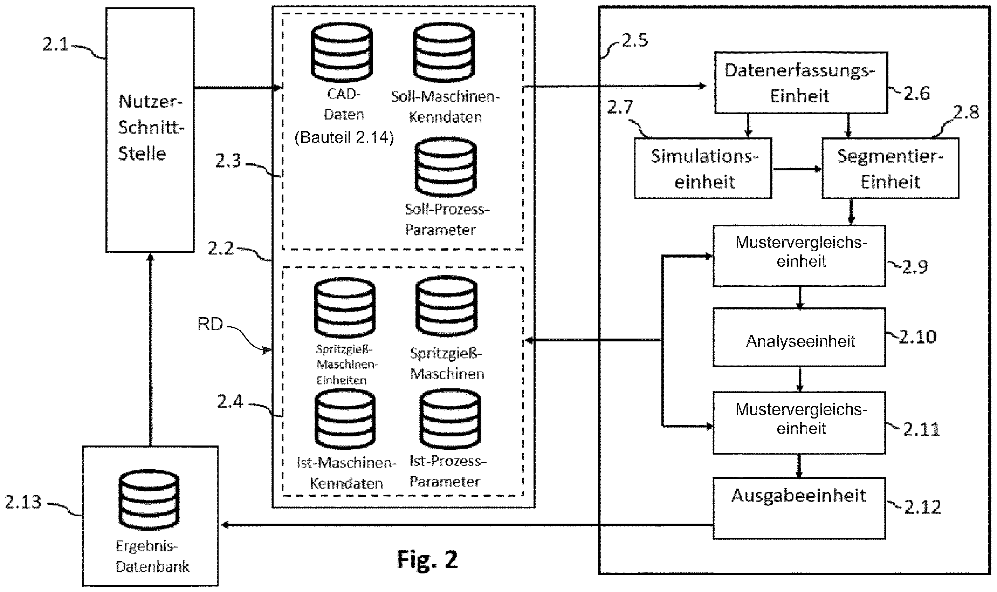

Fig. 2 zeigt ein computerimplementiertes System zur Durchführung eines computerimplementierten Verfahrens zur Bestimmung wenigstens einer Maschine 1.1 zur Verarbeitung von Kunststoffen und anderer plastifizierbarer Materialien auf Grundlage von für eine Produktion von Bauteilen bestimmten und/oder bestimmbaren Kriterien. Bei der Maschine handelt es sich vorzugsweise um eine Spritzgießmaschine zur Verarbeitung von Kunststoffen und anderer plastifizierbarer Materialien, wie sie in Fig. 1 dargestellt ist, oder um eine Maschine zur additiven Fertigung von Bauteilen. Grundsätzlich ist eine Anwendung an anderen Kunststoff-verarbeitenden Maschinen möglich.

Der Begriff "plastifizierbare Materialien" ist dabei weit zu verstehen und umfasst insbesondere, aber nicht nur, neben den genannten Kunststoffen z.B. keramische, metallische und/oder pulverige Massen ebenso wie Papier, Cellulose, Stärke, Kork, usw. sowie auch Mischmaterialen zwischen derartigen plastifizierbaren Materialien oder recyclierte Materialien. Grundsätzlich ist das Verfahren auch auf bereits zuvor plastifizierte Materialien oder auch plastische Massen anwendbar, die nach dem Ausbringen selbsttätig oder unter Einsatz von Hilfsmitteln aushärten.

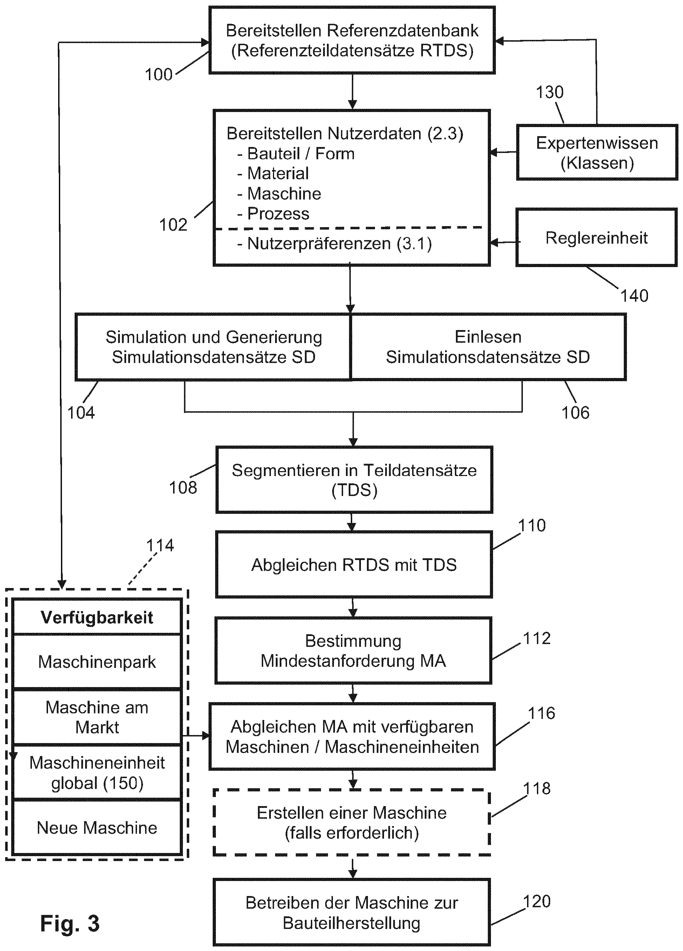

Fig. 2 zeigt das System zum Bestimmen wenigstens einer Maschine 1.1 in der Art eines Konfigurators 2.5 sowie das Verfahren zum Bestimmen einer vorzugsweise bauteil- und nutzeroptimierten Konfiguration einer Maschine oder von Maschineneinheiten einer Maschine, im Ausführungsbeispiel einer Kunststoff-Spritzgießmaschine gemäß Fig. 1. Der konkrete Verfahrensablauf ist in dem Ablaufdiagramm der Fig. 3 dargestellt.

Das System wird im Folgenden im Ausführungsbeispiel an Hand einer Spritzgießmaschine zur Verarbeitung plastifizierbarer Materialien gemäß Fig. 1 erläutert. Grundsätzlich ist das System als auch das Verfahren aber auch an einer bzw. auf eine Maschine zur additiven Fertigung von Bauteilen 2.14 ebenso anwendbar wie grundsätzlich an bzw. auf Maschinen der Kunststoff verarbeitenden Industrie.

Über eine Nutzerschnittstelle 2.1 werden Nutzerdaten 2.3, wie z.B. Soll-Maschinenkenndaten der Spritzgießmaschine, CAD-Daten des herzustellenden Bauteils 2.14 und Soll-Prozessparameter gemäß Fig. 2 in einem Datenspeicher 2.2 zunächst hinterlegt. In den Datenspeicher 2.2 können auch Expertenwissen 130 und/oder bereits bestehende Ergebnisse, z.B. aus früheren Verfahrensabläufen des vorliegenden Verfahrens, aus einer Ergebnisdatenbank 2.13 Eingang finden.

Der Konfigurator 2.5 generiert anschließend aus den erfassten Nutzerdaten 2.3 und Referenzmaschinendaten 2.4 die Ergebnisdatenbank 2.13 mit bauteil- und nutzerspezifischen Konfigurationen von Maschineneinheiten von Maschinen oder Maschinen 1.1, im Ausführungsbeispiel Spritzgießmaschinen, wobei die Konfigurationen vorzugsweise in der Ergebnisdatenbank 2.13 nach einem Anforderungsprofil bzw. Mindestanforderungen MA sortiert sind.

Im Ausführungsbeispiel eines zyklischen Spritzgießprozess einer Spritzgießmaschine aus einer Konfiguration von Maschineneinheiten (bei diesen Maschineneinheiten handelt es sich um die Komponenten der Maschine im Ausführungsbeispiel mit den Bezugszeichen 1.2 bis 1.12) wird plastifizierbares Material über eine Materialzuführeinheit 1.10 in eine temperierbare Plastifiziereinheit 1.7 eingebracht, durch eine Schneckenwelle 1.8 mit einer Rückstromsperre 1.9 plastifiziert und anschießend über die Materialaustrittseinheit 1.6 in mindestens eine Kavität der Werkzeugeinheit 1.5, hier ein Spritzgießwerkzeug, eingebracht. Weiterhin ist wenigstens eine Maschinensteuerung 1.2 mit einem Datenspeicher 1.3 in der Maschine 1.1 vorgesehen, wobei die Maschinensteuerung 1.2 durch eine Anzeigevorrichtung 1.12 bedienbar ist.

Zur Herstellung von Spritzgießbauteilen (Bauteil 2.14) z.B. in einem zyklischen Spritzgießprozess wird eine bauteilspezifische Spritzgießmaschine benötigt, d.h. eine Maschine 1.1, die den Anforderungen bei der Herstellung des Bauteils 2.14 genügt und für diese Herstellung geeignet ist, so dass ein Bauteil mit den Qualitätsanforderungen genügenden Eigenschaften gefertigt werden kann.

So ist z.B. die Zahl der Kavitäten und die Geometrie der Kavitäten der Werkzeugeinheit 1.5 auf die Antriebseinheiten 1.4, 1.11 (z.B. erforderliche Schließkraft, erforderlich Einspritzkraft), auf die Plastifiziereinheit 1.7 (z.B. Schneckengeometrie) und auf die Materialzuführeinheit 1.10 bzw. auf die Materialaustrittseinheit 1.6 abzustimmen. Der Konfigurator 2.5 stellt dabei selbsttätig z.B. aus CAD-Daten des herzustellenden Bauteils 2.14 und weiteren Nutzerdaten 2.3 eine bauteil- und nutzeroptimierte Konfiguration einer Maschine 1.1 über eine Nutzerschnittstelle 2.1 bereit.

Dazu werden CAE-Simulationen des bauteilspezifischen Spritzgießprozesses in einer Simulationseinheit 2.7 durchgeführt und die Ergebnisdaten der Simulation (Simulationsdaten SD) bei der Auswahl geeigneter Konfigurationen herangezogen. Die Simulationseinheit kann grundsätzlich auf jedem geeigneten Rechner bzw. Computer vorgesehen sein, sie kann aber auch auf einer Maschinensteuerung 1.2 lauffähig sein.

Der Spritzgießprozess bzw. allgemein der Herstellungsprozess kann mithilfe einer CAE-Simulation in der Simulationseinheit 2.7 nachgebildet werden. Eine solche CAE-Simulation besteht üblicherweise aus einer Strömungssimulation des plastifizierten Materials in dem Formwerkzeug der Werkzeugeinheit 1.5 (Füllsimulation) und/oder einer Strömungssimulation des Plastifizierprozesses (Schmelzsimulation) in der Plastifiziereinheit 1.7. Im Bereich der additiven Fertigung tritt an die Stelle einer Füllsimulation in der Regel eine Simulation eines Bauteilaufbaus. Dazu werden z.B. die CAD-Daten des herzustellenden Bauteils und/oder weitere Nutzerdaten 2.3 wie Prozessdaten, wie z.B. Materialkennwerte, in der CAE-Simulation verwendet, um bauteil- und maschinenspezifische Sollkurven der Prozessparameter, wie z.B. Einspritzdruck, Nachdruck, Geschwindigkeit der Antriebseinheiten, Füllvolumen, usw. (s.o.), zu bestimmen.

Damit kann in einem Konfigurator 2.5 eine Simulationseinheit 2.7 aus Nutzerdaten 2.3 in einem Datenspeicher eine bauteil- und nutzerspezifische CAE-Simulation durchführen. Dafür sind technische Informationen wie z.B. Daten betreffend Form von Bauteil 2.14 oder Kavität und ferner wenigstens eine Gruppe der folgenden Daten erforderlich, umfassend Materialkenndaten des zu verarbeitenden Materials, Soll-Maschinenkenndaten oder Soll-Prozessdaten, da diese Informationen maßgeblich die von der Maschine 1.1 zu erfüllenden Anforderungen bestimmen.

Zur Bestimmung einer bauteil- und nutzeroptimierten Maschine 1.1 oder Maschineneinheit werden gemäß Fig. 2 zunächst die Nutzerdaten 2.3, umfassend z.B. CAD-Daten des herzustellenden Bauteils 2.14, Soll-Maschinenkenndaten und Soll-Prozessdaten, über eine Nutzerschnittstelle 2.1 eingegeben und in einem Datenspeicher 2.2 hinterlegt. Eine Datenerfassungseinheit 2.6 überführt die Nutzerdaten 2.3 in den Konfigurator 2.5 und übergibt die für die CAE-Simulation benötigten Nutzerdaten 2.3 in die Simulationseinheit 2.7, die die Simulationsdaten SD dann in die Segmentiereinheit 2.8 weitergibt.

Die restlichen Nutzerdaten 2.3, insbesondere die, aber nicht nur die, die nicht in der Simulationseinheit 2.7 verarbeitet werden, können direkt in die Segmentiereinheit 2.8 eingebracht und zusammen mit den Simulationsdaten SD in Teildatensätze TDS aufgeteilt werden.

Aus diesen so erstellten Teildatensätzen wird nun ein Arbeitsdatensatz für eine Konfiguration einer Maschine 1.1 oder Maschineneinheit generiert, die den anhand der Simulation und den Nutzerdaten ersichtlichen und ermittelbaren Anforderungen für eine qualitativ hochwertige Herstellung des wenigstens einen Bauteils 2.14 (möglichst) am besten genügt.

Dazu wird der Arbeitsdatensatz in einer ersten Mustervergleichseinheit 2.9 mit den Referenzmaschinendaten 2.4 abgeglichen, wobei zumindest wenigstens ein Kriterium aus den Maschinenkenndaten oder aus den Sollprozessparametern oder aus den Materialkenndaten zum Vergleich herangezogen wird. Im Ergebnis werden in der Mustervergleichseinheit 2.9 Vergleichsdaten erstellt.

Aus den Vergleichsdaten wird in einer Analyseeinheit 2.10 bzw. einer Profilerstellungseinheit ein Anforderungsprofil als Mindestanforderung MA für die zu konfigurierende Maschine 1.1 oder Maschineneinheit erstellt, welche in einer zweiten Vergleichseinheit 2.11 mit den hinterlegten Maschinen 1.1 und Maschineneinheiten aus den Referenzmaschinendaten 2.4 abgeglichen werden. Dabei wird in der zweiten Mustervergleichseinheit 2.11 wenigstens eine bauteil-und nutzeroptimierte Maschine 1.1, vorzugsweise mehrere Maschinen, oder wenigstens eine bauteil- und nutzerspezifische Konfiguration von Maschineneinheiten ausgewählt, welche die Mindestanforderung MA am besten erfüllt.

Dazu ist vorzugsweise die zweite Mustervergleichseinheit 2.11, ggf. aber auch eine andere Systemeinheit, dazu eingerichtet, zumindest aus wenigstens zwei der Elemente - ggf. aber auch aus noch weiteren Elementen -, umfassend die Nutzerdaten 2.3, die Simulationsdatensätze SD, die Teildatensätze TDS und die Mindestanforderungen MA aus verschiedenen Maschinen einzusammeln und daraus, gruppiert nach gleichen oder ähnlichen Maschinenkonfigurationen, gleichen Prozessen und/oder gleichen oder ähnlichen zu verarbeitenden Materialien, Cluster zu bilden und diese Cluster auszuwerten, um durch federated learning Maschinen mit einer infolge von Ergebnissen der Auswertung angepassten Mindestanforderung MA zu betreiben.

Die ausgewählten Maschinen werden anschließend in einer Ausgabeeinheit 2.12 nach wenigstens einem Kriterium aus den Nutzerdaten 2.3 sortiert, in eine Ergebnisdatenbank 2.13 überführt und über die Nutzerschnittstelle 2.1 bereitgestellt.

Grundsätzlich kann für das erzielte Ergebnis neben dem Datenbankeintrag ein Code, z.B. DataMatrix Code, bereitgestellt werden, mit dem das Ergebnis jederzeit wieder aufgerufen werden kann (mit allen gewählten/simulierten Daten).

Denkbar ist auch, das in der Ergebnisdatenbank 2.13 ein digitaler Zwilling der Maschine erzeugt wird, auf dem dann die Simulation dieses spezifischen Prozesses zur Erzeugung des Bauteils 2.14 lauffähig ist.

Fig. 3 zeigt ein Ablaufdiagramm für ein computerimplementiertes Verfahren zur Bestimmung wenigstens einer für die Herstellung wenigstens eines Bauteils geeigneten Maschine zur Verarbeitung von Kunststoffen und anderer plastifizierbarer Materialien auf Grundlage von für eine Produktion von Bauteilen bestimmten und/oder bestimmbaren Kriterien. In einer Referenzdatenbank RD werden in Schritt 100 Referenzmaschinendaten bereitgestellt, die zur Bestimmung von Maschinenparametern erforderliche Referenzteildatensätze RTDS umfassen. Jedem Referenzteildatensatz sind Maschinenparameter zugeordnet wie zum Beispiel Wandstärke, Querschnitte, bestimmte Drücken oder Fördermengen, die damit einer Leistungskapazität von Maschineneinheiten zuordenbar sind. Ebenso kann z.B. eine bestimmte Füllmenge, ein Massevolumen bzw. eine gewünschte Zykluszeit einer Spritzgießeinheit oder der Größe und Kraft einer Formschließeinheit zugeordnet werden, um im Beispiel einer Spritzgießmaschine zu bleiben.

In Schritt 102 werden Nutzerdaten 2.3 über eine Nutzerschnittstelle 2.1 bereitgestellt. Bei den Nutzerdaten handelt es sich um bestimmte und/oder von einem Nutzer bestimmbare Kriterien, die für die Herstellung wenigstens eines Bauteils erforderliche Daten als Nutzerdaten 2.3 umfassen. Bei diesen Daten handelt es sich vorzugsweise um CAD-Daten des Bauteils oder einer Form oder Kavität. Neben diesen erforderlichen Daten umfassen die Nutzerdaten wenigstens eine Gruppe der folgenden Daten, nämlich Materialkenndaten des zu verarbeitenden Materials, Soll-Maschinenkenndaten oder Soll-Prozessdaten. Diese Daten können auch klassenweise gruppiert zur Verfügung gestellt werden. Eingang in die Nutzerdaten 2.3 als auch in die Referenzmaschinendaten kann Expertenwissen 130 finden.

Auf Grundlage der Nutzerdaten 2.3 erfolgt nun eine Simulation zur Herstellung des wenigstens einen Bauteils 2.14 auf einer Maschine 1.1 unter Generierung von Simulationsdatensätzen SD in Schritt 104 und/oder alternativ kann ein Einlesen von bereits vorhanden Simulationsdatensätzen SD erfolgen, die bei der Herstellung wenigstens eines Bauteils 2.14 auf einer oder für eine Maschine 1.1 generiert wurden (Schritt 106). Dabei hängt es im ersten Fall von den eingegebenen Nutzerdaten ab, ob die Simulation bereits auf einer dem Grunde nach bekannten Maschine oder maschinenunabhängig erfolgt. Vorzugsweise kann z.B. eine Füllsimulation oder eine Simulation eines Bauteilaufbaus im Falle einer additiven Fertigung auch ohne Kenntnis der Eigenschaften einer Maschine erfolgen und gleichwohl gestatten, Maschinenparameter zu ermitteln. Grundsätzlich kann die Simulation auf der Maschine selbst erfolgen, die Konfiguration läuft in der Regel aber als App auf einem PC bzw. einer vergleichbarem Einrichtung, alternativ on Edge oder als Cloud-Anwendung.

Die so gewonnenen Simulationsdatensätze SD werden zur Extraktion von Teildatensätzen TDS in Schritt 108 segmentiert, wobei die Teildatensätze maschinenseitige Maschinenparameter betreffen, mit denen eine Maschine 1.1 zur Herstellung des wenigstens einen Bauteils 2.1 zu betreiben ist.

Damit liegen zum einen Referenzteildatensätze RTDS vor, die eine Zuordnung von Daten zu Maschinenparametern und Prozessparametern ermöglichen, sowie entsprechende Teildatensätze TDS. In Schritt 110 erfolgt ein Abgleichen der Teildatensätze TDS mit den Referenzteildatensätze RTDS aus der Referenzdatenbank RD auf Teilübereinstimmungen.

Aufgrund dieser Teilübereinstimmungen erfolgt nun in Schritt 112 ein Bestimmen und Ausgeben einer Mindestanforderung MA an eine Maschine 1.1 oder Maschineneinheit, das heißt die Anforderung die von der Maschine zumindest erfüllt werden muss, um bei der Herstellung des wenigstens einen Bauteils ein möglichst gutes und vorzugsweise qualitativ hochwertiges Ergebnis zu erzielen.

An dieser Stelle werden Daten zumindest aus wenigstens zwei der Elemente, umfassend wenigstens die Nutzerdaten, die Simulationsdatensätze SD, die Teildatensätze TDS und die Mindestanforderungen MA, aus verschiedenen Maschinen eingesammelt und daraus, gruppiert nach gleichen oder ähnlichen Maschinenkonfigurationen, gleichen Prozessen und/oder gleichen oder ähnlichen zu verarbeitenden Materialien, Cluster gebildet. Diese Cluster werden ausgewertet, um durch federated learning Maschinen mit einer infolge von Ergebnissen der Auswertung angepassten Mindestanforderung MA zu betreiben.

Nachdem die Mindestanforderung MA in Schritt 112 bestimmt wurde, kann diese nun mit entsprechenden Daten von Maschinen oder Maschineneinheiten abgeglichen werden, die über verfügbare Maschinen 1.1 oder Maschineneinheiten vorliegen. Die hierzu erforderliche Ermittlung erfolgt einerseits über die Referenzmaschinendaten 2.4, die in der Referenzdatenbank RD vorliegen. Zu diesen Referenzdaten können aber auch sämtliche Informationen gehören, die die Verfügbarkeit in Schritt 114 betreffen.

Die Verfügbarkeit betrifft grundsätzlich alle verfügbaren Maschinen oder Maschineneinheiten, sei es z.B. in einem Maschinenpark eines Betreibers, sei es Maschinen, die grundsätzlich am Markt zur Verfügung stehen, wie zum Beispiel Maschinen bei Lohnfertigern, oder auch global oder regional vorhandene Maschineneinheiten oder Maschinen, die gegebenenfalls über ein globales oder regionales Suchsystem 150 zu ermitteln sind.

Zu den verfügbaren Maschinen können aber auch Maschinen gehören, die noch nicht existent sind, aber aufgrund der Mindestanforderung MA konfiguriert und damit herstellbar sind. Das Abgleichen der Mindestanforderung MA mit den Maschinen oder Maschineneinheiten führt damit im Ergebnis des Schritts 116 zu den geeigneten Maschinen oder Maschineneinheiten. Diese Maschinen oder Maschineneinheiten werden vorzugsweise über eine Ausgabeeinheit ausgegeben und der Ergebnisdatenbank 2.13 zur Verfügung gestellt und können bedarfsweise nach bestimmten und/oder bestimmbaren Kriterien priorisiert werden.

Ist die Maschine noch nicht vorhanden, das heißt muss sie noch erstellt werden, kann dies bedarfsweise im Schritt 118 erfolgen.

Das Abgleichen der Mindestanforderung MA mit den verfügbaren Maschinen führt in Schritt 120 dazu, dass wenigstens eine Maschine oder Maschineneinheit zur Herstellung des wenigstens einen Bauteils 2.14 betrieben wird. Um es nochmals deutlich zu machen, kann nach Bestimmung einer geeigneten Maschine 1.1 oder Maschineneinheit entweder aus einem Maschinenpark eines Betreibers eine geeignete Maschine oder eine geeignete Maschineneinheit zum Aufbau einer geeigneten Maschine ausgewählt werden und/oder, wenn eine geeignete Maschine bei wenigstens einem Anbieter (Lohnfertiger) am Markt vorhanden ist, eine Herstellung des herzustellenden Bauteils 2.14 zur Fertigung auf der geeigneten Maschine des wenigstens einen Anbieters vorgeschlagen werden. Dadurch lässt sich ggf. auch auf Maschinen zugreifen, die nicht unmittelbar im eigenen Maschinenpark verfügbar sind. Vorteilhaft kann dadurch ggf. ein wichtiger Auftrag abgearbeitet werden, für den sonst keine geeignete Maschine vorhanden wäre.

Nach Bestimmung einer geeigneten Maschine 1.1 oder Maschineneinheit kann mit einem globalen oder regionalen Suchsystem 150 global oder regional, z.B. auch mit einer Umkreissuche, ermittelt werden, wo sich geeignete Maschinen oder Maschineneinheiten befinden, um eine Maschine 1.1 zur Herstellung des wenigstens einen Bauteils 2.14 aufzubauen. Im Prinzip lässt sich damit z.B. eine geeignete Formschließeinheit an einem Ort und eine geeignete Plastifiziereinheit an einem anderen Ort auf der Erde ausfindig zu machen. Ebenso kann dadurch eine Maschine gegebenenfalls so umgebaut werden, dass eine passende Maschineneinheit beigezogen wird, die an einem beliebigen Ort auf der Erde vielleicht schneller zu beschaffen ist als selbst beim Hersteller.

Vorzugsweise umfassen die Nutzerdaten auch Nutzerpräferenzen, die mittels einer Reglereinheit 140 linear oder diskret auf Basis eines definierten Parametersatzes festlegbar sind. Bei derartigen Nutzerpräferenzen kann es sich nicht nur um die oben genannten Nutzerdaten, sondern auch um weiche Faktoren handeln, die z.B. die Kosten pro Bauteil, den Energiebedarf pro Bauteil oder die Herstellungszeit pro Bauteil oder vergleichbare Präferenzen umfassen. Über die Reglereinheit 140 kann vom Benutzer bestimmt werden, welche Gewichtung und damit welchen Einfluss diese Nutzerpräferenzen auf das Ergebnis haben. Denn die Nutzerpräferenzen führen zu einer Änderung der Mindestanforderung MA, die über die Ausgabeeinheit 2.12 dem Nutzer bereitgestellt wird.

Durch die Parametrisierung der Nutzerpräferenzen können bestehende Zuordnungen von Werkzeugen und Maschinenauslegungen, beispielsweise im Hinblick auf die beim Nutzer bestehenden Umgebungsbedingungen angepasst werden. Der Nutzer kann damit bei Auswahl der Maschine oder Maschineneinheit seine unternehmensspezifische Situation, zum Beispiel auf Basis von Maschinenkonzept-Templates berücksichtigen.

Verfahrensgemäß können beim Segmentieren der Simulationsdatensätze SD auch Nutzerdaten 2.3 zusätzlich oder gesondert zur Extraktion von Teildatensätzen TDS segmentiert werden. Damit lassen sich über Nutzerdaten allein gegebenenfalls auch maschinenunabhängige Kriterien definieren, die vorteilhaft Eingang in die Auswahl von Maschinen oder Maschineneinheiten finden.

Grundsätzlich finden Simulationen Anwendung, die am Markt bereits bewährt und gut eingeführt sind. In der Regel handelt es sich bei der Simulation zur Herstellung wenigstens eines Bauteils 2.14 um eine Füllsimulation für die Füllung eines Formhohlraums eines (Spritzgieß-)Werkzeugs bzw. einer Werkzeugeinheit 1.5 oder um eine Simulation eines Bauteilaufbaus bei einer additiven Fertigung und/oder um eine Strömungssimulation eines Plastifizierprozesses des plastifizierbaren Materials in einer Plastifiziereinheit 1.7. Im Falle einer additiven Fertigung ist eine Simulation des Aufbaus des zu fertigenden Teils denkbar.

Grundsätzlich werden damit Simulationsergebnisse insbesondere des Formenbaus in den Auswahlprozess einer geeigneten Maschine 1.1 eingebunden bzw. überführt. Um eine geeignete Maschine für ein Spritzgießwerkzeug oder eine Werkzeugeinheit 1.5 zu identifizieren, sollte vorzugsweise das Füllverhalten der Form bei Verwendung eines bestimmten zu verarbeitenden Materials oder einer bestimmten Materialklasse von Bedeutung sein bzw. in die die Nutzerdaten 2.3 Eingang finden.

Formenbauer greifen während der Entwicklung der Spritzgießform auf sogenannte Füllsimulationen zu. Diese Füllsimulationen erlauben es, für jede Geometrie das Füllverhalten der Form zu simulieren. Aus dem Ergebnis dieser Simulation kann ein Datensatz berechnet werden, auf den zur Auslegung der hier erforderlichen Maschinenparameter und Prozessparameter zur Bestimmung einer geeigneten Maschine oder Maschineneinheit vorzugsweise zugegriffen werden kann.

Vorzugsweise sind ergänzend Informationen zur Geometrie der Form bzw. des Bauteils 2.14 sowie weiterführende Informationen zu formabhängigen Prozessparametern von Vorteil. Rein theoretisch ist eine Simulation der gesamten Maschine bzw. Anlage möglich. Denkbar ist z.B. einen digitalen Zwilling auf der Grundlage der Simulationsdaten laufen zu lassen. Grundsätzlich genügt es jedoch, insbesondere auf die genannten Simulationen (Füllsimulation, Schmelzesimulation, Bausimulation) zurückzugreifen, da diese Simulationsdatensätze SD in der Regel auch bereits vorliegen.

Diese Simulationsdatensätze SD werden ausgewertet und vorzugsweise wenigstens in die für die plastifizierseitige Auslegung der Maschine 1.1 notwendigen Teildatensätze segmentiert. Ergänzend können auch formschließseitige Informationen segmentiert und/oder abgeleitet werden. Berücksichtigt werden dabei sowohl auftragsseitige als auch prozessseitige Anforderungen.

Um die Maschinenparameter und Prozessparameter zu bestimmen, müssen ausgehend von den Simulationsdatensätzen SD die zugrunde gelegten Rahmenbedingungen der Simulation in reale Maschinenparameter übersetzt werden. Dabei ist eine unmittelbare Zuordnung zwischen Maschine und Bauteil nur in Ausnahmefällen möglich. Üblicherweise wird mit Mindestgrenzen, zum Beispiel im Falle einer Spritzgießmaschine des Fülldrucks gearbeitet.

Grundsätzlich wäre es möglich, für jede Maschine einen Deckungsgrad mit den Anforderungen anzugeben und/oder auf Basis eines Expertenwissens 130 Anpassungsvorschläge zu unterbreiten. Dies könnte zum Beispiel in Form der Berücksichtigung der Nutzerpräferenzen 3.1 geschehen. Ebenso ist vorstellbar, konkrete Vorschläge für Maschinenparameter anzugeben, um die Maschine unterhalb einer Grenzbelastung zu fahren, um dadurch Ausfälle zu vermeiden bzw. ein kurzfristiges Arbeiten an Grenzen der Maschinenbelastung zu gestatten.

Da Simulationsdatensätze SD in der Regel so gut sind wie die ihr zugrunde liegenden Daten, besteht zusätzlich die Möglichkeit, eine Abschätzungseinheit vorzusehen, die dazu eingerichtet ist, auf der Basis der Qualität der Simulationsdaten eine Schärfeaussage der Maschinenparameter anzugeben. Damit ergibt sich ein Maß für eine erfolgreiche Abmusterung, wobei vorzugsweise für die Schärfeaussage die Daten geeignet gruppiert werden und für jede Gruppe ein Qualitätslevel bestimmt wird.

Der Referenzdatenbank RD ist vorzugsweise ein selbstlernendes System zugeordnet, sodass Ergebnisse aus dem Verfahren oder aus der Ergebnisdatenbank 2.13 wiederum der Referenzdatenbank zugeführt werden können. Die Referenzdatenbank ist mit einer zugeordneten Recheneinheit in der Lage, diese Referenzdaten bedarfsweise zu segmentieren und zu gruppieren, um sie künftigen Bewertungen zugrunde zu legen. Vorzugsweise werden dazu die Simulationsdatensätze SD und die Teildatensätze in eine Eingangsschicht einer KI-Vorrichtung bzw. Datenpipeline mit Kl-Vorrichtung eingebracht.

Idealerweise werden in größeren Spritzgießbetrieben Daten aus ähnlichen oder gleichen Verfahrensabläufen für Maschinen, auf denen ähnliche oder gleiche Prozesse mit Materialien der ähnlichen oder gleichen Materialklasse laufen, "eingesammelt". Dieses Zusammenfassen "on edge" und Auswerten aller Daten erlaubt es, im Rahmen eines federated learning noch bessere Algorithmen und somit ein noch besseres und zuverlässigeres Modell zur Bestimmung einer geeigneten Maschine zu erhalten. Der Betreiber von Anlagen kann einen so generierten Algorithmus aus seiner "Modellfabrik" auf andere Produktionsstandorte ausrollen und erhält weltweit gleich gute Auswahlmöglichkeiten bei gleichzeitigem KnowHow-Schutz.

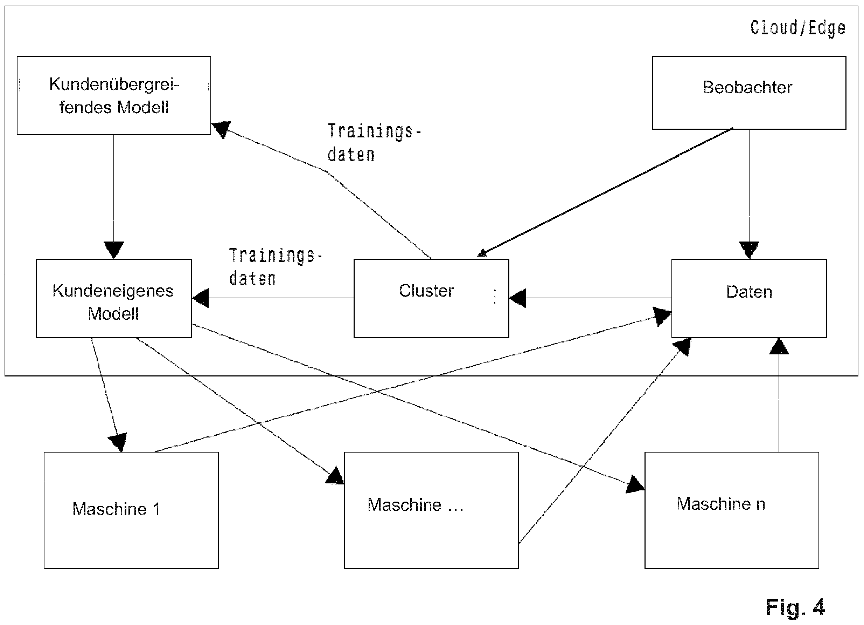

Dies wird durch das Schema der Fig. 4 näher erläutert. Der obere Teil der Figur zeigt eine Cloud / Edge-Lösung. Dazu werden gemäß Fig. 4 insbesondere zwei der Elemente umfassend folgende Daten ausgewertet:
- Nutzerdaten (2.3),
- Simulationsdatensätze (SD),
- Teildatensätze (TDS)
- Mindestanforderungen (MA).

Diese Daten werden von der Maschine 1, Maschine... bis zur Maschine n eingesammelt und von einem Beobachter z.B. nach gleichen oder ähnlichen Maschinenkonfigurationen, gleichen Prozessen und/oder gleichen oder ähnlichen zu verarbeitenden Materialien geclustert. Diese Cluster werden ausgewertet und bilden Trainingsdaten für ein kundeneigenes Modell, insbesondere zur Bestimmung und Auswahl wenigstens einer geeigneten Maschinen 1.1, um durch federated learning bzw. "Schwarmwissen" auch andere Maschinen, z.B. im Maschinenpark des Kunden, mit den Ergebnissen der Auswertung zu betreiben. Das Modell kann insbesondere schon im Vorfeld Auswahlmöglichkeiten ausgeben, um z.B. in Kenntnis der Maschinenkonfiguration einem Nutzer eine geeignete Maschine zu empfehlen.

Der Maschinenhersteller ist zudem daran interessiert, dass der Maschinenbetreiber zumindest Extrakte der "on edge" erzeugten Algorithmen in der Cloud des Maschinenherstellers bereitstellt. Dieser sammelt von möglichst vielen Maschinenbetreibern (Kunden) die Extrakte der Algorithmen, d.h., das an Inhalten, was von Kunden freigegeben wird, vergleicht diese und schärft somit die Generierung eines kundenübergreifenden Modells (Deep learning).

Die hinsichtlich des Verfahrens angeführten Vorteile stellen sich auch bei Maschinensteuerung 1.2 für eine Maschine 1.1 zur Verarbeitung von Kunststoffen und anderer plastifizierbarer Materialien ein, sofern die Maschinensteuerung 1.2 eingerichtet, ausgeführt und/oder konstruiert ist, um das Verfahren entsprechend auszuführen.

Ebenso stellen sich die verfahrensgemäßen Vorteile bei der Verwendung eines Computerprogrammprodukts mit einem Programmcode ein, der auf einem Computer lesbaren Medium gespeichert ist, sodass das Verfahren unter Verwendung des Programmcodes durchgeführt werden kann.

### Bezugszeichenliste

- 1.1: Maschine
- 1.2: Steuerung
- 1.3: Datenspeicher
- 1.4: Antriebseinheit
- 1.5: Werkzeugeinheit
- 1.6: Materialaustrittseinheit
- 1.7: Plastifiziereinheit
- 1.8: Schneckenwelle
- 1.9: Rückstromsperre
- 1.10: Materialzuführeinheit
- 1.11: Antriebseinheit
- 1.12: Anzeigevorrichtung
- 2.1: Nutzerschnittstelle
- 2.2: Datenspeicher
- 2.3: Nutzerdaten
- 2.4: Referenzmaschinendaten
- 2.5: Konfigurator
- 2.6: Datenerfassungseinheit
- 2.7: Simulationseinheit
- 2.8: Segmentiereinheit
- 2.9: erste Mustervergleichseinheit
- 2.10: Analyseeinheit
- 2.11: zweite Mustervergleichseinheit
- 2.12: Ausgabeeinheit
- 2.13: Ergebnisdatenbank
- 2.14: Bauteil
- 3.1: Nutzerpräferenzen
- 100-120: Schritte
- 130: Expertenwissen
- 140: Reglereinheit
- 150: globales Suchsystem
- MA: Mindestanforderung
- RD: Referenzdatenbank
- RTDS: Referenzteildatensatz
- SD: Simulationsdatensatz
- TDS: Teildatensatz

## Patentansprüche

1. Computerimplementiertes Verfahren zur Bestimmung wenigstens einer Maschine (1.1) zur Verarbeitung von Kunststoffen und anderer plastifizierbarer Materialien auf Grundlage von für eine Produktion von wenigstens einem Bauteil (2.14) bestimmten und/oder bestimmbaren Kriterien, wobei das Verfahren die Schritte aufweist:
(a) Bereitstellen einer Referenzdatenbank (RD) mit Referenzmaschinendaten (2.4), umfassend zur Bestimmung von Maschinenparametern erforderliche Referenzteildatensätze (RTDS), wobei jedem Referenzteildatensatz Maschinenparameter zugeordnet sind,
(b) Bereitstellen von Nutzerdaten (2.3) über eine Nutzerschnittstelle (2.1) als bestimmte und/oder bestimmbare Kriterien in einen Datenspeicher (2.2), welche Nutzerdaten (2.3) für die Herstellung wenigstens eines Bauteils (2.14) erforderliche Daten, insbesondere CAD-Daten, umfassen und ferner wenigstens eine Gruppe der folgenden Daten umfassen:
- Materialkenndaten des zu verarbeitenden Materials,
- Soll-Maschinenkenndaten,
- Soll-Prozessdaten,
(c) Durchführen einer Simulation zur Herstellung des wenigstens einen Bauteils (2.14) auf einer Maschine (1.1) unter Generierung von Simulationsdatensätzen (SD) und/oder Einlesen von bei der Herstellung wenigstens eines Bauteils (2.14) auf der Maschine (1.1) generierten Simulationsdatensätzen (SD) auf der Grundlage der Nutzerdaten (2.3),
(d) Segmentieren der Simulationsdatensätze (SD) zur Extraktion von Teildatensätzen (TDS), wobei die Teildatensätze maschinenseitige Maschinenparameter betreffen, mit denen eine Maschine (1.1) zur Herstellung des wenigstens eines Bauteils (2.14) zu betreiben ist,
(e) Abgleichen der Teildatensätze (TDS) mit den Referenzteildatensätzen (RTDS) aus der Referenzdatenbank (RD) auf Teilübereinstimmungen,
(f) Ausgeben einer Mindestanforderung (MA) an eine Maschine (1.1) oder Maschineneinheit bei Herstellung des wenigstens einen Bauteils (2.14) aufgrund der Teilüberstimmungen,
**gekennzeichnet durch** die Schritte,
(g) dass zumindest aus wenigstens zwei der Elemente, umfassend die Nutzerdaten (2.3), die Simulationsdatensätze (SD), die Teildatensätze (TDS) und die Mindestanforderungen (MA) aus verschiedenen Maschinen eingesammelt werden und daraus, gruppiert nach gleichen oder ähnlichen Maschinenkonfigurationen, gleichen Prozessen und/oder gleichen oder ähnlichen zu verarbeitenden Materialien Cluster gebildet werden und diese Cluster ausgewertet werden, um durch federated learning Maschinen mit einer infolge von Ergebnissen der Auswertung angepassten Mindestanforderung (MA) zu betreiben,
(h) Ermitteln von verfügbaren Maschinen (1.1) oder Maschineneinheiten aus den Referenzmaschinendaten (2.4),
(i) Abgleichen der Mindestanforderung (MA) mit den verfügbaren Maschinen (1.1) oder Maschineneinheiten zur Bestimmung wenigstens einer zur Herstellung des wenigstens einen Bauteils (2.14) geeigneten Maschine (1.1) oder Maschineneinheit,
(j) Betreiben der Maschine (1.1) oder Maschineneinheit zur Herstellung des wenigstens einen Bauteils (2.14).

2. Verfahren nach Anspruch 1, **dadurch gekennzeichnet, dass** nach Bestimmung einer geeigneten Maschine (1.1) oder Maschineneinheit nach Schritt (i) entweder aus einem Maschinenpark eines Betreibers eine geeignete Maschine oder geeignete Maschineneinheit zum Aufbau einer geeigneten Maschine ausgewählt werden und/oder, wenn eine geeignete Maschine bei wenigstens einem Anbieter am Markt vorhanden ist, eine Herstellung des herzustellenden Bauteils (2.14) zur Fertigung auf der geeigneten Maschine des wenigstens einen Anbieters vorgeschlagen wird.

3. Verfahren nach Anspruch 1 oder 2, **dadurch gekennzeichnet, dass** nach Bestimmung einer geeigneten Maschine (1.1) oder Maschineneinheit nach Schritt (i) eine geeignete Maschine vom Hersteller entsprechend der Mindestanforderung (MA) konfiguriert wird und/oder global oder regional ermittelt wird, wo sich geeignete Maschineneinheiten befinden, um eine Maschine (1.1) zur Herstellung des wenigstens einen Bauteils (2.14) aufzubauen.

4. Verfahren nach einem der vorhergehenden Ansprüche, **dadurch gekennzeichnet, dass** die Nutzerdaten (2.3) Nutzerpräferenzen (3.1) umfassen, die mittels einer Reglereinheit (140) linear oder diskret auf Basis eines definierten Parametersatzes festlegbar sind, und dass eine Änderung der Mindestanforderung (MA) auf Basis der Nutzerpräferenzen (3.1) analysiert und ausgegeben wird.

5. Verfahren nach einem der vorhergehenden Ansprüche, **dadurch gekennzeichnet, dass** beim Segmentieren der Simulationsdatensätze (SD) auch Nutzerdaten (2.3) zusätzlich oder gesondert zur Extraktion von Teildatensätzen (TDS) segmentiert werden.

6. Verfahren nach einem der vorhergehenden Ansprüche, **dadurch gekennzeichnet, dass** das Verfahren auf eine Spritzgießmaschine oder auf eine Maschine zur additiven Fertigung von Bauteilen angewandt wird.

7. Verfahren nach einem der vorhergehenden Ansprüche, **dadurch gekennzeichnet, dass** die Simulation zur Herstellung des wenigstens einen Bauteils (2.14) eine Füllsimulation für die Füllung eines Formhohlraums eines Spritzgießwerkzeugs (Werkzeugeinheit 1.5) oder eine Simulation eines Bauteilaufbaus bei einer additiven Fertigung und/oder eine Strömungssimulation eines Plastifizierprozesses des plastifizierbaren Materials in einer Plastifiziereinheit (1.7) ist.

8. Verfahren nach einem der vorhergehenden Ansprüche, **dadurch gekennzeichnet, dass** der Referenzdatenbank (RD) ein selbstlernendes System zugeordnet wird, wobei Referenzmaschinendaten (2.4) der Referenzdatenbank zugeführt werden, die segmentiert und gruppiert werden, wobei vorzugsweise dazu die Simulationsdatensätze (SD) und die Teildatensätze in eine Eingangsschicht einer KI-Vorrichtung bzw. eine Datenpipeline mit Kl-Vorrichtung eingebracht werden.

9. Verfahren nach einem der vorhergehenden Ansprüche, **gekennzeichnet durch** die Schritte:
- Vergleichen der Ergebnisse der Auswertung zumindest teilweise miteinander, vorzugsweise cloud-basiert, und Ermitteln von Vergleichsergebnissen,
- Schärfen der für das Verfahren erforderlichen Referenzmaschinendaten (2.4) aufgrund der Vergleichsergebnisse.

10. Computerimplementiertes System zur Bestimmung wenigstens einer Maschine (1.1) zur Verarbeitung von Kunststoffen und anderer plastifizierbarer Materialien auf Grundlage von für eine Produktion von wenigstens einem Bauteil (2.14) bestimmten und/oder bestimmbaren Kriterien, wobei das System folgende Komponenten aufweist:
- eine Referenzdatenbank (RD) mit Referenzmaschinendaten (2.4), umfassend zur Bestimmung von Maschinenparametern erforderliche Referenzteildatensätze (RTDS), wobei jedem Referenzteildatensatz Maschinenparameter zugeordnet sind,
- einer Nutzerschnittstelle (2.1), die dazu eingerichtet ist, Nutzerdaten (2.3) als bestimmte und/oder bestimmbare Kriterien in einen Datenspeicher (2.2) bereitzustellen, welche Nutzerdaten (2.3) für die Herstellung wenigstens eines Bauteils (2.14) erforderliche Daten, insbesondere CAD-Daten, umfassen und ferner wenigstens eine Gruppe der folgenden Daten umfassen:
- Materialkenndaten des zu verarbeitenden Materials,
- Soll-Maschinenkenndaten,
- Soll-Prozessdaten,
- eine Simulationseinheit (2.7), die dazu eingerichtet ist, auf der Grundlage der Nutzerdaten (2.3) die Herstellung des wenigstens einen Bauteils (2.14) auf einer Maschine (1.1) unter Generierung von Simulationsdatensätzen (SD) zu simulieren, und/oder eine Einleseeinheit, die dazu eingerichtet ist, bei der Herstellung wenigstens eines Bauteils auf der Grundlage der Nutzerdaten auf der Maschine generierte Simulationsdatensätze (SD) einzulesen,
- eine Segmentiereinheit (2.8), die dazu eingerichtet ist, die Simulationsdatensätze (SD) zur Extraktion von Teildatensätzen (TDS) zu segmentieren, wobei die Teildatensätze (TDS) maschinenseitige Maschinenparameter betreffen, mit denen eine Maschine (1.1) zur Herstellung des wenigstens eines Bauteils (2.14) zu betreiben ist,
- eine erste Mustervergleichseinheit (2.9), die dazu eingerichtet ist, die Teildatensätze (TDS) mit den Referenzteildatensätzen (RTDS) aus der Referenzdatenbank (RD) auf Teilübereinstimmungen zu vergleichen,
- eine Analyseeinheit (2.10), die dazu eingerichtet ist, eine Mindestanforderung (MA) an eine Maschine (1.1) oder Maschineneinheit bei Herstellung des wenigstens einen Bauteils (2.14) aufgrund der Teilüberstimmungen zu bestimmen und an eine Ausgabeeinheit (2.12) auszugeben,
**dadurch gekennzeichnet, dass** das System folgende weitere Komponenten aufweist;
- eine zweite Mustervergleichseinheit (2.11), die dazu eingerichtet ist, zumindest aus wenigstens zwei der Elemente, umfassend die Nutzerdaten (2.3), die Simulationsdatensätze (SD), die Teildatensätze (TDS) und die Mindestanforderungen (MA) aus verschiedenen Maschinen einzusammeln und daraus, gruppiert nach gleichen oder ähnlichen Maschinenkonfigurationen, gleichen Prozessen und/oder gleichen oder ähnlichen zu verarbeitenden Materialien Cluster zu bilden und diese Cluster auszuwerten, um durch federated learning Maschinen mit einer infolge von Ergebnissen der Auswertung angepassten Mindestanforderung (MA) zu betreiben,
- wobei die zweite Mustervergleichseinheit (2.11) dazu eingerichtet ist, die Mindestanforderung (MA) mit den aus den Referenzmaschinendaten (2.4) ermittelten, verfügbaren Maschinen (1.1) oder Maschineneinheiten zur Bestimmung wenigstens einer zur Herstellung des wenigstens einen Bauteils (2.14) geeigneten Maschine (1.1) oder Maschineneinheit abzugleichen,
- eine geeignete Maschine (1.1) oder Maschineneinheit, die dazu eingerichtet ist, das wenigstens eine Bauteil (2.14) gemäß der Mindestanforderung (MA) herzustellen.

11. System nach Anspruch 10, **dadurch gekennzeichnet, dass** nach Bestimmung einer geeigneten Maschine (1.1) oder Maschineneinheit ein Konfigurator (2.5) vorgesehen ist, der dazu eingerichtet ist, eine geeignete Maschine oder Maschineneinheit beim Hersteller zu konfigurieren und/oder herzustellen, und/oder ein globales oder regionales Suchsystem (150) vorgesehen ist, das dazu eingerichtet ist, global oder regional zu ermitteln, wo sich geeignete Maschineneinheiten befinden, um eine Maschine zur Herstellung des wenigstens einen Bauteils (2.14) aufzubauen.

12. System nach Anspruch 10 oder 11, **dadurch gekennzeichnet, dass** die Nutzerschnittstelle (2.1) dazu eingerichtet ist, Nutzerpräferenzen (3.1) einzugeben, die mittels einer Reglereinheit (140) linear oder diskret auf Basis eines definierten Parametersatzes festlegbar sind, und dass die Analyseeinheit (2.10) dazu eingerichtet ist, die Mindestanforderung (MA) auf Basis der Nutzerpräferenzen zu ändern.

13. System nach einem der Ansprüche 10 bis 12, **dadurch gekennzeichnet, dass** die Segmentiereinheit (2.8) dazu eingerichtet ist, neben den Simulationsdatensätzen (SD) auch die Nutzerdaten (2.3) zusätzlich oder gesondert zur Extraktion von Teildatensätzen (TDS) zu segmentieren.

14. System nach einem der Ansprüche 10 bis 13, **dadurch gekennzeichnet, dass** das System an einer Spritzgießmaschine oder an einer Maschine zur additiven Fertigung von Bauteilen vorgesehen ist.

15. System nach einem der Ansprüche 10 bis 14, **dadurch gekennzeichnet, dass** die Simulation zur Herstellung des wenigstens einen Bauteils (2.14) eine Füllsimulation für die Füllung eines Formhohlraums eines Spritzgießwerkzeugs (Werkzeugeinheit 1.5) oder eine Simulation eines Bauteilaufbaus bei einer additiven Fertigung und/oder eine Strömungssimulation eines Plastifizierprozesses des plastifizierbaren Materials in einer Plastifiziereinheit (1.7) ist.

16. System nach einem der Ansprüche 11 bis 15, **dadurch gekennzeichnet, dass** der Referenzdatenbank (RD) ein selbstlernendes System zugeordnet ist, das dazu eingerichtet ist, die Referenzmaschinendaten (2.4) zu segmentieren und zu gruppieren, wobei vorzugsweise die Simulationsdatensätze (SD) und die Teildatensätze in eine Eingangsschicht einer Kl-Vorrichtung bzw. einer Datenpipeline mit Kl-Vorrichtung eingebracht werden.

17. Maschinensteuerung (1.2) für eine Maschine zur Verarbeitung von Kunststoffen und anderer plastifizierbarer Materialien, **dadurch gekennzeichnet, dass** die Maschinensteuerung (1.2) eingerichtet, ausgeführt und/oder konstruiert ist, um das Verfahren zur Bestimmung wenigstens einer Maschine (1.1) nach einem der Ansprüche 1 bis 9 auszuführen.

18. Computerprogrammprodukt mit einem Programmcode, der auf einem Computer lesbaren Medium gespeichert ist, zur Durchführung eines Verfahrens zur Bestimmung wenigstens einer Maschine (1.1) nach einem der Ansprüche 1 bis 9.

## Claims

1. Computer-implemented method for determining at least one machine (1.1) for processing plastics and other plasticisable materials on the basis of criteria determined and/or determinable for a manufacturing of at least one component (2.14), the method comprising the steps:
(a) providing a reference database (RD) with reference machine data (2.4), comprising reference part data sets (RTDS) required for determining machine parameters, wherein machine parameters are assigned to each reference part data set,
(b) providing user data (2.3) via a user interface (2.1) as determined and/or determinable criteria in a data storage (2.2), which user data (2.3) comprise data required for the manufacture of at least one component (2.14), in particular CAD data, and further comprise at least one group of the following data:
- Material characteristics of the material to be processed,
- Target machine characteristics,
- Target process data,
(c) performing a simulation for manufacturing the at least one component (2.14) on a machine (1.1) while generating simulation data sets (SD) and/or reading in simulation data sets (SD) generated during the manufacture of at least one component (2.14) on the machine (1.1) on the basis of the user data (2.3),
(d) segmenting the simulation data sets (SD) for extracting partial data sets (TDS), wherein the partial data sets relate to machine-side machine parameters with which a machine (1.1) is to be operated for manufacturing the at least one component (2.14),
(e) comparing the partial data sets (TDS) with the reference part data sets (RTDS) from the reference database (RD) for partial matches,
(f) outputting a minimum requirement (MA) to a machine (1.1) or machine unit when manufacturing the at least one component (2.14) on the basis of the partial matches,
**characterized by** the steps,
(g) that at least two of the elements comprising the user data (2.3), the simulation data sets (SD), the partial data sets (TDS) and the minimum requirements (MA) are collected from different machines and clusters are formed therefrom, grouped according to the same or similar machine configurations, the same processes and/or the same or similar materials to be processed, and these clusters are evaluated in order to operate machines with a minimum requirement (MA) adapted as a result of the results of the evaluation by means of federated learning,
(h) determining available machines (1.1) or available machine units from the reference machine data (2.4),
(i) comparing the minimum requirement (MA) with the available machines (1.1) or available machine units to determine at least one machine (1.1) or machine unit suitable for manufacturing the at least one component (2.14),
(j) operating the machine (1.1) or machine unit for manufacturing the at least one component (2.14).

2. Method according to claim 1, **characterised in that**, after determining a suitable machine (1.1) or machine unit according to step (i), either a suitable machine or suitable machine unit for setting up a suitable machine is selected from a machine park of an owner-operator and/or, if a suitable machine is available on the market, from at least one supplier, a manufacturing of the component (2.14) to be manufactured is proposed for manufacturing on the suitable machine of the at least one supplier.

3. Method according to claim 1 or 2, **characterised in that**, after determining a suitable machine (1.1) or machine unit according to step (i), a suitable machine is configured by the manufacturer in accordance with the minimum requirement (MA) and/or it is determined globally or regionally where suitable machine units are located in order to configure a machine (1.1) for manufacturing the at least one component (2.14).

4. Method according to claim 1, **characterised in that** the user data (2.3) comprise user preferences (3.1) which are determinable linearly or discretely on the basis of a defined parameter set by means of a control unit (140), and **in that** a change in the minimum requirement (MA) is analysed and output on the basis of the user preferences (3.1).

5. Method according to one of the preceding claims, **characterised in that** during the segmenting of the simulation data sets (SD), user data (2.3) are also segmented additionally or separately for extraction of partial data sets (TDS).

6. Method according to one of the preceding claims, **characterised in that** the method is applied to an injection moulding machine or to a machine for additive manufacturing of components.

7. Method according to one of the preceding claims, **characterised in that** the simulation for manufacturing the at least one component (2.14) is a filling simulation for filling a mould cavity of an injection mould (mould unit 1.5) or a simulation of a component structure in additive manufacturing and/or a flow simulation of a plasticising process of the plasticisable material in a plasticising unit (1.7).

8. Method according to one of the preceding claims, **characterised in that** a self-learning system is assigned to the reference database (RD), reference machine data (2.4) being supplied to the reference database, which are segmented and grouped, the simulation data sets (SD) and the partial data sets preferably being introduced into an input layer of an AI device or a data pipeline with an AI device for this purpose.

9. Method according to one of the preceding claims, **characterised by** the steps:
- comparing the results of the evaluation at least partially with each other, preferably cloud-based, and determining comparison results,
- sharpening the reference machine data (2.4) required for the manufacturing based on the comparison results.

10. Computer-implemented system for determining at least one machine (1.1) for processing plastics and other plasticisable materials on the basis of criteria determined and/or determinable for manufacturing at least one component (2.14), the system comprising the following components:
- a reference database (RD) with reference machine data (2.4), comprising reference part data sets (RTDS) required for determining machine parameters, wherein machine parameters are assigned to each reference part data set,
- a user interface (2.1) configured for providing user data (2.3) as determined and/or determinable criteria in a data storage (2.2), the user data (2.3) comprising data required for the manufacturing of at least one component (2.14), in particular CAD data, and furthermore comprising at least one group of the following data:
- Material characteristics of the material to be processed,
- Target machine characteristics,
- Target process data,
- a simulation unit (2.7) configured for simulating the manufacture of the at least one component (2.14) on a machine (1.1) on the basis of the user data (2.3), while generating simulation data sets (SD), and/or a read-in unit configured for reading in simulation data sets (SD) generated on the machine on the basis of the user data during the manufacture of at least one component,
- a segmentation unit (2.8) configured for segmenting the simulation data sets (SD) for extracting partial data sets (TDS), wherein the partial data sets (TDS) relate to machine-side machine parameters with which a machine (1.1) for manufacturing the at least one component (2.14) is to be operated,
- a first pattern matching unit (2.9) configured for comparing the partial data sets (TDS) with the reference partial data sets (RTDS) from the reference database (RD) for partial matches,
- an analysis unit (2.10) configured for determining a minimum requirement (MA) for a machine (1.1) or machine unit in manufacturing the at least one component (2.14) on the basis of the partial matches and for outputting it to an output unit (2.12),
**characterized in that** the system comprises the following further components:
- a second pattern matching unit (2.11) configured for collecting data from at least two of the elements comprising the user data (2.3), the simulation data sets (SD), the partial data sets (TDS) and the minimum requirements (MA) from different machines and for forming clusters therefrom, grouped according to identical or similar machine configurations, identical processes and/or identical or similar materials to be processed, and for evaluating these clusters in order to operate machines with a minimum requirement (MA) adapted as a result of the results of the evaluation by means of federated learning,
- wherein the second pattern matching unit (2.11) is configured for comparing the minimum requirement (MA) with the available machines (1.1) or machine units determined from the reference machine data (2.4) to determine at least one machine (1.1) or machine unit suitable for manufacturing the at least one component (2.14),
- a suitable machine (1.1) or machine unit configured for manufacturing the at least one component (2.14) in accordance with the minimum requirement (MA).

11. System according to claim 10, **characterised in that**, after determining a suitable machine (1.1) or a suitable achine unit, a configurator (2.5) is provided, which is configured for configuring and/or manufacturing a suitable machine or machine unit at the manufacturer, and/or a global or regional search system (150) is provided which is configured for determining globally or regionally where suitable machine units are located in order to configure a machine for manufacturing the at least one component (2.14).

12. System according to claim 10 or 11, **characterised in that** the user interface (2.1) is configured for entering user preferences (3.1) which can be determined linearly or discretely on the basis of a defined parameter set by means of a control unit (140), and **in that** the analysis unit (2.10) is configured for changing the minimum requirement (MA) on the basis of the user preferences.

13. System according to one of claims 10 to 12, **characterised in that** the segmentation unit (2.8) is configured for segmenting the user data (2.3) in addition or separately to the simulation data sets (SD) for extracting partial data sets (TDS).

14. System according to one of claims 10 to 13, **characterised in that** the system is provided on an injection moulding machine or on a machine for the additive manufacturing of components.

15. System according to one of claims 10 to 14, **characterised in that** the simulation for producing the at least one component (2.14) is a filling simulation for filling a mould cavity of an injection mould (mould unit 1.5) or a simulation of a component structure in additive manufacturing and/or a flow simulation of a plasticising process of the plasticisable material in a plasticising unit (1.7).

16. System according to one of claims 11 to 15, **characterised in that** the reference database (RD) is assigned a self-learning system configured for segmenting and grouping the reference machine data (2.4), the simulation data sets (SD) and the partial data sets preferably being introduced into an input layer of an AI device or a data pipeline with an AI device.

17. Machine control (1.2) for a machine for processing plastics and other plasticisable materials, **characterised in that** the machine control (1.2) is configured, designed and/or constructed to carry out the method for determining at least one machine (1.1) according to one of claims 1 to 9.

18. A computer program product comprising a program code stored on a computer readable medium for carrying out a method for determining at least one machine (1.1) according to any one of claims 1 to 9.

## Revendications

1. Procédé mis en oeuvre par ordinateur pour la détermination d'au moins une machine (1.1) pour la transformation de matières plastiques et d'autres matériaux plastifiables sur la base de critères déterminés et/ou déterminables pour une production d'au moins une pièce (2.14), ce procédé comprenant les étapes consistant à :
(a) mettre à disposition une banque de données de référence (DR) avec des données de machine de référence (2.4), comprenant des ensembles de données partielles de référence (EDPR) nécessaires pour la détermination de paramètres de machine, des paramètres de machine étant associés à chaque ensemble de données partielles de référence,
(b) mettre à disposition des données d'utilisateur (2.3) par l'intermédiaire d'une interface utilisateur (2.1) en tant que critères déterminés et/ou déterminables dans une mémoire de données (2.2), lesquelles données utilisateur (2.3) comprennent des données, en particulier des données de CAO, nécessaires pour la fabrication d'au moins une pièce (2.14) et comprennent en outre au moins un groupe des données suivantes :
- données caractéristiques du matériau à transformer,
- données de machine caractéristiques de consigne,
- données de processus de consigne,
(c) exécuter une simulation pour la fabrication de la ou des pièce(s) (2.14) sur une machine (1.1) par génération d'ensembles de données de simulation (DS) et/ou lecture d'ensembles de données de simulation (DS) générées lors de la fabrication d'au moins une pièce (2.14) sur la machine (1.1) sur la base des données d'utilisateur (2.3),
(d) segmenter les ensembles de données de simulation (DS) pour l'extraction d'ensembles de données partielles (EDP), les ensembles de données partielles concernant des paramètres de machine du côté de la machine, avec lesquels une machine (1.1) doit être pilotée pour la fabrication de la ou des pièce(s) (2.14),
(e) mettre en accord les ensembles de données partielles (EDP) avec les ensembles de données partielles de référence (EDPR) provenant de la banque de données de référence (DR) sur des correspondances partielles,
(f) émettre un minimum requis (MR) au niveau d'une machine (1.1) ou unité de machine lors de la fabrication de la ou des pièce(s) (2.14) sur la base des correspondances partielles,
**caractérisé**
(g) **en ce qu'**au moins à partir d'au moins deux éléments, comprenant les données utilisateur (2.3), les ensembles de données de simulation (DS), les ensembles de données partielles (EDP) et les minima requis (MR) provenant de plusieurs machines sont collectés et ensuite regroupés suivant des configurations de machine identiques ou similaires, des processus identiques et/ou des matériaux à transformer identiques ou similaires, des groupes sont formés et ces groupes sont exploités pour piloter par apprentissage fédéré des machines avec un minimum requis (MR) adapté suite aux résultats de l'exploitation,
(h) par la détermination de machines (1.1) ou d'unités de machine disponibles à partir des données de machine de référence (2.4),
(i) la mise en accord du minimum requis (MR) avec les machines (1.1) ou les unités de machine disponibles pour la détermination d'au moins une machine (1.1) ou unité de machine appropriée pour la fabrication de la ou des pièce(s) (2.14),
(j) le pilotage de la machine (1.1) ou de l'unité de machine pour la fabrication de la ou des pièces (2.14).

2. Procédé selon la revendication 1, **caractérisé en ce qu'**après la détermination de la machine (1.1) ou unité de machine appropriée suivant l'étape (1), une machine ou unité de machine appropriée est choisie dans un parc de machines d'un utilisateur pour la constitution de la machine appropriée et/ou lorsqu'une machine appropriée est présente sur le marché en cas de présence d'au moins un fournisseur, une fabrication de la pièce à fabriquer (2.14) est proposée pour l'opération sur la machine appropriée du ou des fournisseur(s).

3. Procédé selon la revendication 1 ou 2, **caractérisé en ce qu'**après la détermination d'une machine (1.1) ou unité de machine appropriée suivant l'étape (i), une machine appropriée est configurée par le fabricant en correspondance avec le minimum requis (MR) et/ou est déterminée globalement ou localement, là où se trouvent des unités de machine appropriées, pour constituer une machine (1.1) pour la fabrication de la ou des pièce(s) (2.14).

4. Procédé selon l'une des revendications précédentes, **caractérisé en ce que** les données d'utilisateur (2.3) comprenant des préférences d'utilisateur (3.1), qui peuvent être fixées au moyen d'une unité de réglage (140) linéairement ou de façon discrète sur la base d'un ensemble de paramètres défini et **en ce qu'**une modification du minimum requis (MA) est analysée sur la base des préférences d'utilisateur (3.1) et transmise.

5. Procédé selon l'une des revendications précédentes, **caractérisé en ce que** lors de la segmentation de l'ensemble de données de simulation (DS) des données d'utilisateur (2.3) sont aussi segmentées en plus ou séparément de l'extraction d'ensembles de données partielles (EDP).

6. Procédé selon l'une des revendications précédentes, **caractérisé en ce que** le procédé est mise en oeuvre sur une machine de moulage par injection ou sur une machine d'opération supplémentaire sur des pièces.

7. Procédé selon l'une des revendications précédentes, **caractérisé en ce que** la simulation pour la fabrication de la ou des pièces (2.14) est une simulation de remplissage pour le remplissage d'un moule d'outil de moulage par injection (unité d'outils 1.5) ou une simulation d'une fabrication de pièce lors de l'opération supplémentaire et/ou une simulation d'écoulement d'un processus de plastification du matériau plastifiable dans une unité de plastification (1.7).

8. Procédé selon l'une des revendications précédentes, **caractérisé en ce qu'**un système auto-apprenant est associé à la banque de données de référence (DR), des données de machine de référence (2.4) étant fournies à la banque de données de référence et segmentées et groupées, les ensembles de données de simulation (DS) et les ensembles de données partielles étant pour cela de préférence introduits dans une couche d'entrée d'un dispositif à IA ou d'un canal de données avec un dispositif à IA.

9. Procédé selon l'une des revendications précédentes, **caractérisé par** les étapes suivantes :
- comparaison des résultats de l'exploitation au moins partiellement les uns aux autres, de préférence sur la base d'un cloud, et détermination des résultats de la comparaison,
- affinement des données de machine de référence (2.4) nécessaires pour le procédé sur la base des résultats de la comparaison.

10. Système mise en oeuvre par ordinateur pour la détermination d'au moins une machine (1.1) pour la transformation de matières plastiques et d'autre matériaux plastifiables sur la base de critères déterminés et/ou déterminables pour une production d'au moins une pièce (2.14), ce système comprenant les composants suivants :
- une banque de données de référence (DR) avec des données de machine de référence (2.4), comprenant des ensembles de données partielles de référence (EDPR) nécessaires pour la détermination de paramètres de machine, des paramètres de machine étant associés à chaque ensemble de données partielles de référence,
- une interface utilisateur (2.1), qui est configurée pour mettre à disposition des données d'utilisateur (2.3) en tant que critères déterminés et/ou déterminables dans une mémoire de données (2.2), lesquelles données d'utilisateur (2.3) comprenant des données, en particulier des données de CAO, nécessaires pour la fabrication d'au moins une pièce (2.14) et comprenant en outre au moins un groupe des données suivantes :
- données caractéristiques du matériau à transformer,
- données caractéristiques de machine de consigne,
- des données de processus de consigne,
- une unité de simulation (2.7) qui est configurée pour simuler, sur la base des données d'utilisateur (2.3), la fabrication de la ou des pièce(s) (2.14) sur une machine (1.1) par génération d'ensembles de données de simulation (DS) et/ou une unité de lecture qui est configurée pour lire, lors de la fabrication d'au moins une pièce, sur la base des données d'utilisateur, des ensembles de données de simulation (DS) générés sur la machine,
- une unité de segmentation (2.8), qui est configurée, pour segmenter les ensembles de données de simulation (DS) pour l'extraction d'ensembles de données partielles (EDP), les ensembles de données partielles (EDP) concernant des paramètres de machine du côté de la machine, avec lesquels une machine (1.1) doit être pilotée pour la fabrication de la ou des pièce(s) (2.14),
- une première unité de comparaison avec un modèle (2.9), qui est configurées pour comparer les ensembles de données partielles (EDP) avec les ensembles de données partielles de référence (EDPR) de la banque de données de référence (DR) sur des correspondances partielles,
- une unité d'analyse (2.10), qui est configurée pour déterminer un minimum requis (MR) au niveau d'une machine (1.1) ou unité de machine lors de la fabrication de la ou des pièce(s) (2.14) sur la base de correspondances partielles et le transmettre à une unité de transmission (2.12),
**caractérisé en ce que** le système présente les autres composants suivants :
- une deuxième unité de comparaison avec un modèle (2.11), qui est configurée au moins pour rassembler au moins deux des éléments comprenant les données d'utilisateur (2.3), les ensembles de données de simulation (DS), les ensembles de données partielles (EDP) et les minima requis (MR) provenant de plusieurs machines, et à partir de cela, de former de manière groupée suivant des configurations de machine identiques ou similaires, les mêmes processus et/ou des matériaux identiques ou similaires, des groupes et d'exploiter ces groupes pour piloter des machines par apprentissage fédéré avec un minimum requis (MR) adapté suite aux résultats de l'exploitation,
- la deuxième unité de comparaison avec un modèle (2.11) étant configurée, pour mettre en accord le minimum requis (MR) avec les machines (1.1) ou unités de machines disponibles déterminées à partir des données de machine de référence (2.4) pour la détermination d'au moins une machine (1.1) ou unité de machine appropriée pour la fabrication de la ou des pièce(s) (2.14),
- une machine (1.1) ou unité de machine appropriée qui est configurée pour fabriquer la ou les pièce(s) (2.14) selon le minimum requis (MR).

11. Système selon la revendication 10, **caractérisé en ce qu'**après la détermination d'une machine (1.1) ou unité de machine appropriée, un configurateur (2.5) est prévu et configuré pour configurer et/ou fabriquer une machine ou unité de machine appropriée chez le fabricant et/ou un système de recherche global ou local (150) est prévu et configuré pour déterminer globalement ou localement où se trouvent des unités de machine appropriées pour constituer une machine pour la fabrication de la ou des pièce(s) (2.14).

12. Système selon la revendication 10 ou 11, **caractérisé en ce que** l'interface utilisateur (2.1) est configurée pour introduire des préférences utilisateur (3.1) qui peuvent être fixées au moyen d'une unité de réglage (140) de façon linéaire ou discrète sur la base d'un ensemble de paramètres définis, et **en ce que** l'unité d'analyse (2.10) est configurée pour modifier le minimum requis (MR) sur la base des préférences utilisateur.

13. Système selon l'une des revendications 10 à 12, **caractérisé en ce que** l'unité de segmentation (2.8) est configurée pour segmenter, outre les ensembles de données de simulation (DS), les données d'utilisateur (2.3) en plus ou séparément de l'extraction à partir d'ensembles de données partielles (EDP).

14. Système selon l'une des revendications 10 à 13, **caractérisé en ce que** le système est prévu sur une machine de moulage par injection ou sur une machine pour une opération supplémentaire sur des pièces.

15. Système selon l'une des revendications 10 à 14, **caractérisé en ce que** la simulation pour la fabrication de la ou des pièce(s) (2.14) est une simulation de remplissage pour le remplissage d'un moule d'outil de moulage par injection (unité d'outil 15) ou une simulation d'une constitution de pièce lors d'une opération supplémentaire et/ou une simulation d'écoulement d'un processus de plastification du matériau plastifiable dans une unité de plastification (1.7).

16. Système selon l'une des revendications 11 à 15, **caractérisé en ce qu'**un système auto-apprenant est associé à la banque de données de référence (DR) et configuré pour segmenter et grouper les données de machine de référence (2.4), les ensembles de données de simulation (DS) et les ensembles de données partielles étant de de préférence introduits dans une couche d'entrée d'un dispositif à IA ou d'un canal de données avec un dispositif à IA.

17. Commande de machine (1.2) pour une machine pour la transformation de matières plastiques et d'autres matériaux plastifiables, **caractérisée en ce que** cette commande de machine (1.2) est configurée, mise en oeuvre et/ou construite pour mettre le procédé de détermination d'au moins une machine (1.1) selon l'une des revendications 1 à 9.

18. Produit avec un programme d'ordinateur ayant un code programme, qui est stocké sur un milieu lisible par un ordinateur, pour la mise en oeuvre d'un procédé de détermination d'au moins une machine (1.1) selon l'une des revendications 1 à 9.
